# EUROPÄISCHE PATENTSCHRIFT

(11) **EP 2 173 503 B1**
(45) Veröffentlichungstag und Bekanntmachung des Hinweises auf die Patenterteilung: **14.09.2011**
(21) Anmeldenummer: 08756805.1
(22) Anmeldetag: 05.06.2008
(51) Int. Cl.: B21F 27/10, B23K 11/00

(54) **VERFAHREN UND ANLAGE ZUM HERSTELLEN VON DRAHTGITTERMATTEN**
METHOD AND SYSTEM FOR PRODUCING WIRE LATTICE MATS
PROCÉDÉ ET SYSTÈME DE FABRICATION DE TREILLIS MÉTALLIQUES

(30) Priorität: 31.07.2007 AT 11982007
(43) Veröffentlichungstag der Anmeldung: 14.04.2010
(73) Patentinhaber: EVG Entwicklungs- u. Verwertungs- Gesellschaft m.b.H., A-8074 Raaba (AT)
(72) Erfinder: RITTER, Klaus, A-8042 Graz (AT); TREMMEL, Robert, A-8042 Graz (AT); GRABUSCHNIG, Josef, A-8043 Graz (AT)
(74) Vertreter: Holzer, Walter
(86) Internationale Anmeldenummer: PCT/AT2008/000194
(87) Internationale Veröffentlichungsnummer: WO 2009/015401

(56) Entgegenhaltungen:
- WO-A-89/11933
- WO-A-02/070168
- DE-A1- 2 622 167
- DE-A1- 4 207 672

## Beschreibung

Die Erfindung betrifft ein Verfahren zum Herstellen von Drahtgittermatten mit parallelen Längsdrähten, die mit oberen und/oder unteren Querdrähten an den Kreuzungspunkten der Längsdrähte und der Querdrähte durch elektrisches Widerstandsschweißen verbunden sind, sowie eine Anlage zur Durchführung des Verfahrens.

Aus der DE-A1-42 07 672 sind ein Verfahren und eine Vorrichtung zum Herstellen von Betonstahlmatten bekannt. Hierbei werden zur Erhöhung der Produktionsleistung zwei Widerstandsschweißmaschinen zum Herstellen der Drahtgittermatten spiegelbildlich zueinander angeordnet, wobei der Abstand der beiden Widerstandsschweißmaschinen verändert werden kann. Die Vorrichtung zum Durchführen des Verfahrens weist eine in Längsdrahtrichtung verstellbare Gitterschere auf. Die Ebene der Schweißelektroden und damit die Querdrahtposition beim Verschweißen ist maximal 75 mm von der jeweiligen Rahmenkante der Widerstandsschweißmaschinen entfernt angeordnet. Dieses Verfahren hat den Nachteil, daß die Drahtgittermatten gewendet werden müssen, um ein platzsparendes Stapeln zu ermöglichen, wodurch, insbesondere beim Herstellen kleiner Drahtgittermatten, die Produktionsgeschwindigkeit erheblich eingeschränkt wird. Außerdem besteht der Nachteil, daß die Schweißelektroden sehr nahe an der äußeren Kante des Maschinenrahmens angeordnet sein müssen, um eine kleine Querdrahtteilung zu ermöglichen. Eine weitere Einschränkung der Produktionsgeschwindigkeit ergibt sich dadurch, daß der Querdraht der auslaufseitigen Widerstandsschweißmaschine auslaufseitig von außen zugebracht wird.

DE-A-26 22 167 beschreibt ein Verfahren und eine Anlage zum Herstellen von wie erwähnt ausgebildeten Drahtgittermatten, wobei zwei parallele, in der Querrichtung verlaufende Schweißlinien vorgesehen sind, die jeweils eine der Zahl der Längsdrähte entsprechende Anzahl von Schweißstationen aufweisen, welche die beiden Querdrähte durch elektrisches Widerstandsschweißen gleichzeitig mit allen Längsdrähten der Matte verbinden. Dabei verbindet die eine Schweißlinie einen Querdraht, der oben auf den in einer horizontalen Ebene angeordneten Längsdrähten aufliegt, und die andere Schweißlinie einen Querdraht, der unten an den Längsdrähten anliegt. Es werden so zwei Gittermatten gleichzeitig hergestellt, von denen die eine Gittermatte eine Hälfte der Längsdrähte und die oberen Querdrähte und die andere Gittermatte die andere Hälfte der Längsdrähte und die unteren Querdrähte aufweist. Die beiden gleichzeitig hergestellten Matten liegen ohne Wenden platzsparend aufeinander. Dieses Verfahren bzw. diese Anlage hat den Nachteil, daß Matten mit doppelt übereinander angeordneten Querdrähten oder Matten mit innerhalb einer Matte wechselnder Anordnung der Querdrähte ober- bzw. unterhalb der Längsdrähte nicht hergestellt werden können.

Aufgabe der Erfindung ist es, die geschilderten Nachteile zu vermeiden und ein Verfahren und eine Anlage der einleitend angegebenen Art zu schaffen, welche das Herstellen von Drahtgittermatten mit Querdrähten ermöglichen, die beliebig oben und/oder unten und/oder paarweise übereinander und/oder einfach angeordnet sind.

Die Erfindung geht aus von einem Verfahren der zuletzt genannten Art, wobei zwei in seitlichem Abstand befindliche Querdrähte entlang zweier paralleler Schweißlinien mit den Längsdrähten verschweißt werden und wobei eine Schar von Längsdrähten taktweise in Produktionsrichtung in einer horizontalen Längsdrahtzuführebene zugeführt wird und die zwei in seitlichem Abstand befindlichen Querdrähte taktweise in die jeweilige Einschußlinie und in einen jeder Einschußlinie zugeordneten Einschußkanal zugeführt und auf die für die Breite der Drahtgittermatten jeweils nötige Länge geschnitten werden. Die Erfindung löst die oben genannte Aufgabe dadurch, daß jeder Querdraht wahlweise in einem entlang jeder der beiden Schweißlinien angeordneten oberen und unteren Einschußkanal geführt wird, so daß wahlweise Drahtgittermatten nur mit oberen oder nur mit unteren Querdrähten oder abwechselnd mit oberen und unteren Querdrähten oder Drahtgittermatten mit oben und unten paarweise übereinander angeordneten Querdrähten hergestellt werden; dabei können im Fall der Drahtgittermatten mit oben und unten paarweise übereinander angeordneten Querdrähten bis zu vier Querdrähte gleichzeitig mit den Längsdrähten einer Matte verschweißt werden.

Vorzugsweise kann der Abstand der seitlich benachbarten oberen bzw. unteren Querdrähte durch Verschieben zumindest einer Schweißlinie relativ zur anderen Schweißlinie und durch Wahl der Schrittlänge des Vorschubs der Längsdrähte eingestellt werden.

Nach einem weiteren Merkmal der Erfindung ist es zweckmäßig, wenn entlang der Länge einer herzustellenden Matte die Querdrähte jeweils nur oberhalb oder nur unterhalb der Schar der Längsdrähte angeordnet und mit diesen verschweißt werden, wobei Matten mit oberen Querdrähten, vorzugsweise abwechselnd, auf Matten mit unteren Querdrähten folgen.

Ebenso ist es möglich, daß innerhalb einer Matte die Querdrähte zum Teil oberhalb und zum anderen Teil unterhalb der Längsdrähte angeordnet und mit diesen verschweißt werden. Schließlich ist es möglich, die oberen und die unteren Querdrähte jeweils paarweise in Abstand übereinander angeordnet mit der Schar der Längsdrähte zu verschweißen.

Gegenstand der Erfindung ist auch eine Anlage zum Durchführen des Verfahrens mit einer Einrichtung zum taktweisen Vorschieben einer Schar der Längsdrähte entlang einer horizontalen Längsdrahtzuführebene in der Produktionsrichtung, einer Einrichtung zum taktweisen Vorschieben der Querdrähte zu zwei Einschußlinien, die Einschußkanäle aufweisen und zu einer Schweißvorrichtung mit zwei Schweißlinien mit einer Mehrzahl von Schweißköpfen pro Schweißlinie führen, einer Schneideinrichtung für die Querdrähte sowie mit je einer Zubringeinrichtung für jeden geschnittenen Querdraht zur Schweißvorrichtung. Die Erfindung besteht bei einer solchen Anlage darin, daß entlang jeder der beiden Einschußlinien und Schweißlinien der Schweißvorrichtung ein oberer und ein unterer Einschußkanal mit je einer zugeordneten Zubringeinrichtung vorgesehen ist, die wahlweise einsetzbar sind und dass die Schneideinrichtung samt Drahtführung senkrecht zur Längsdrahtzuführebene schwenkbar ist, um die jeweiligen Einschußlinien zum Beschicken der jeweiligen Einschußkanäle mit Querdrähten in Flucht mit den Einschußkanälen zu bringen.

Vorzugsweise ist zumindest eine Schweißlinie parallel zur anderen verschiebbar und ist die Länge der Taktschritte der Schar von Längsdrähten einstellbar, so daß der seitliche Abstand der Querdrähte wählbar ist.

Zweckmäßig ist jeder Einschußkanal mit einer schwenkbaren Einschußklappe im Arbeitstakt der Schweißanlage öffenbar und schließbar und sind die Querdrähte mittels Zubringarmen in einer geführten Zubringbahn in die jeweilige Schweißlinie förderbar, wobei die in Produktionsrichtung hinten angeordneten Zubringarme durch die Schweißlinie greifen.

Die Querdrähte sind zweckmäßig entlang einer Zubringbahn, die der gekoppelten Bewegung zweier Exzenter entspricht, der Schweißvorrichtung zuführbar.

Die Zubringeinrichtungen sind zweckmäßig zwecks Herausfahren aus dem Bewegungsbereich der Schweißköpfe auf bewegbaren, vorzugsweise schwenkbaren, Balken angeordnet.

Die Querdrahtvorschiebeeinrichtung jeder der beiden Einschußlinien weist vorteilhaft der Reihe nach in Vorschubrichtung gesehen folgende Einrichtungen auf: einen Drahtspeicher, eine einlaufseitige Richteinrichtung samt Drahtführung, eine in beide Richtungen antreibbare Vorschubeinrichtung mit verstellbaren Vorschubrädern, eine Drahtklemmeinrichtung und eine auslaufseitige Richteinrichtung; dabei sind die Querdrähte mittels der genannten Einrichtungen entlang der jeweiligen Einschußlinie der Schneideinrichtung samt Drahtführung zuführbar.

Weitere Merkmale und Vorteile der Erfindung werden nachfolgend an einem Ausführungsbeispiel unter Bezugnahme auf die Zeichnungen näher erläutert. Es zeigen: Fig. 1 eine schematische Seitenansicht einer Anlage gemäß der Erfindung, Fig. 2a eine schematische Draufsicht einer Querdrahtzuführeinrichtung, Fig. 2b eine schematische Seitenansicht der Querdrahtzuführeinrichtung, Fig. 3 eine schematische Darstellung einer aktiven Steuer- und Regeleinrichtung für den Schweißdruck, Fig. 4 die dazugehörigen Kurven des Druckverlaufs für den Schweißzylinder während eines Schweißzyklus, Fig. 5 eine schematische Darstellung eines weiteren Ausführungsbeispiels einer Steuer- und Regeleinrichtung für den Schweißdruck im Gegendruckverfahren, Fig. 6 die dazugehörigen Kurven des Druckverlaufs für den Schweißzylinder während eines Schweißzyklus, Fig. 7a eine Schweißstromeinspeisung der Schweißelektroden mit Wechselstrom, serieller Schaltung der Primärwicklungen der Schweißtransformatoren und einem Sammelschienensystem, Fig. 7b eine Schweißposition gemäß Fig. 7a mit unten liegenden Querdrähten, Fig. 7c eine Schweißposition gemäß Fig. 7a mit oben liegenden Querdrähten, Fig. 8a eine direkte Schweißstromeinspeisung der Schweißelektroden mit Wechselstrom und serieller Schaltung der Primärwicklungen der Schweißtransformatoren, Fig. 8b eine Schweißposition gemäß Fig. 8a mit unten liegenden Querdrähten, Fig. 8c eine Schweißposition gemäß Fig. 8a mit oben liegenden Querdrähten, Fig. 9a eine Schweißstromeinspeisung der Schweißelektroden mit Wechselstrom, paralleler Schaltung der Primärwicklungen der Schweißtransformatoren und einem Sammelschienensystem, Fig. 9b eine Schweißposition gemäß Fig. 9a mit unten liegenden Querdrähten, Fig. 9c eine Schweißposition gemäß Fig. 9a mit oben liegenden Querdrähten, Fig. 10a eine direkte Schweißstromeinspeisung der Schweißelektroden mit Wechselstrom und paralleler Schaltung der Primärwicklungen der Schweißtransformatoren, Fig. 10b eine Schweißposition gemäß Fig. 10a mit unten liegenden Querdrähten, Fig. 10c eine Schweißposition gemäß Fig. 10a mit oben liegenden Querdrähten, Fig. 11a eine Schweißstromeinspeisung der Schweißelektroden mit Gleichstrom, serieller Schaltung der Primärwicklungen der Schweißtransformatoren und einem Sammelschienensystem, Fig. 11b eine Schweißposition gemäß Fig. 11a mit unten liegenden Querdrähten, Fig. 11c eine Schweißposition gemäß Fig. 11a mit oben liegenden Querdrähten, Fig. 12a eine direkte Schweißstromeinspeisung der Schweißelektroden mit Gleichstrom und serieller Schaltung der Primärwicklungen der Schweißtransformatoren, Fig. 12b eine Schweißposition gemäß Fig. 12a mit unten liegenden Querdrähten, Fig. 12c eine Schweißposition gemäß Fig. 12a mit oben liegenden Querdrähten, Fig. 13a eine Schweißstromeinspeisung der Schweißelektroden mit Gleichstrom, paralleler Schaltung der Primärwicklungen der Schweißtransformatoren und einem Sammelschienensystem, Fig. 13b eine Schweißposition gemäß Fig. 13a mit unten liegenden Querdrähten, Fig. 13c eine Schweißposition gemäß Fig. 13a mit oben liegenden Querdrähten, Fig. 14a eine direkte Schweißstromeinspeisung der Schweißelektroden mit Gleichstrom und paralleler Schaltung der Primärwicklungen der Schweißtransformatoren, Fig. 14b eine Schweißposition gemäß Fig. 14a mit unten liegenden Querdrähten, und Fig. 14c eine Schweißposition gemäß Fig. 14a mit oben liegenden Querdrähten.

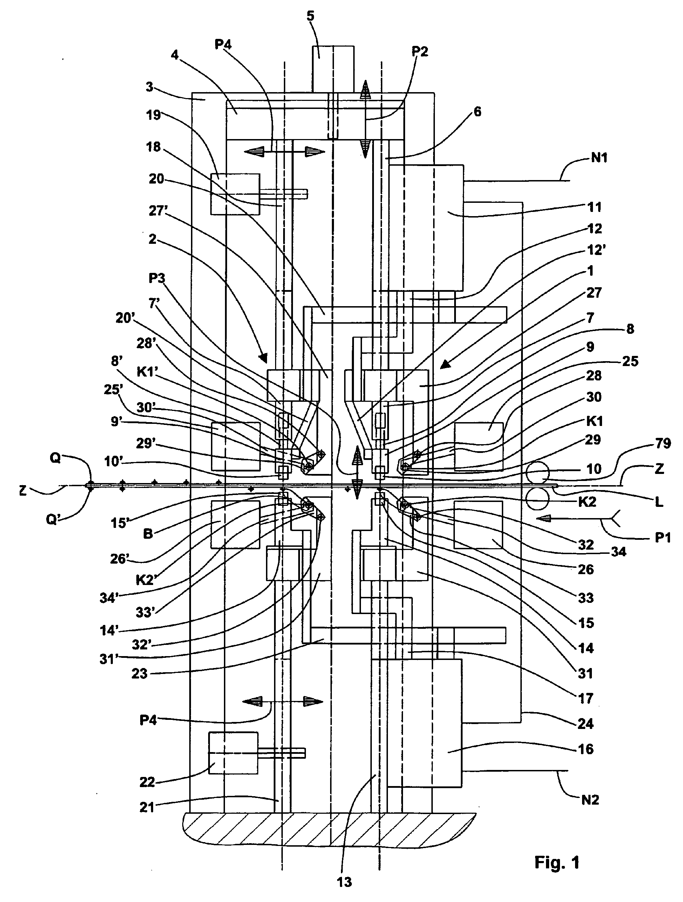

Die in Fig. 1 schematisch dargestellte Anlage dient zum Herstellen von Drahtgittermatten aus Stahldraht, die aus einander rechtwinkelig kreuzenden Längsdrähten L und einer Schar von diese rechtwinkelig kreuzenden und in den Kreuzungspunkten mit den Längsdrähten L verschweißten Querdrähten Q, Q' bestehen. Im Rahmen der Erfindung ist es jedoch auch möglich, die Querdrähte nicht rechtwinkelig anzuordnen. Außerdem können die Querdrähte oberhalb Q und unterhalb Q' der Längsdrahtschar L angeordnet sein, wobei die oberen und unteren Querdrähte Q; Q' sowohl versetzt zueinander als auch genau gegenüberliegend liegen können. Hierbei bilden die genau gegenüberliegenden Querdrähte Q, Q' mit den Längsdrähten L einen Dreifachschweißknoten. Innerhalb einer Drahtgittermatte sind alle Kombinationen dieser Querdrahtanordnungen möglich. Der gegenseitige seitliche Abstand der Längsdrähte L, die sog. Längsdrahtteilung, sowie die jeweiligen gegenseitigen seitlichen Abstände der Querdrähte Q, Q', die sog. Querdrahtteilungen, sind je nach Type der herzustellenden Drahtgittermatte vorgegeben. Die Oberfläche der Drähte L, Q, Q' kann glatt sein oder, wie bei Bewehrungsstählen üblich, eine gerippte Oberfläche aufweisen.

Zur Herstellung der Drahtgittermatten werden die Längsdrähte L parallel und gemeinsam im Arbeitstakt der Schweißmaschine mit gegenseitigem seitlichem, vorgegebenem Abstand zueinander, entlang einer horizontal verlaufenden Längsdrahtzuführebene Z-Z entsprechend der Pfeilrichtung P1 taktweise der Schweißmaschine zugeführt. Die Schweißmaschine arbeitet nach der elektrischen Widerstandsschweißmethode im in Längsdrahtrichtung wirkendem Doppelpunktverfahren und weist zwei Reihen mit jeweils mehreren Schweißköpfen 1 und 2 auf, die entlang zweier rechtwinkelig zur Produktionsrichtung P1 und in der Längsdrahtzuführebene Z-Z verlaufenden Schweißlinien S1-S1, S2-S2 angeordnet sind. Die Anzahl der Schweißköpfe 1, 2 entspricht der maximal möglichen Anzahl der Längsdrähte L in den herzustellenden Drahtgittermatten. Die Querdrähte Q, Q' werden, wie unten beschrieben, von der Seite in die Schweißlinien eingeführt und im Arbeitstakt der Schweißmaschine mit den Längsdrähten L zu Drahtgittern verschweißt. Die fertig verschweißten Drahtgitter werden aus den Schweißlinien S1-S1, S2-S2 herausgezogen und mit Hilfe einer Schneideinrichtung von der Materialbahn abgetrennt. Die derart entstandenen einzelnen Drahtgittermatten werden von einer nachfolgenden Stapeleinrichtung übernommen, die die Drahtgittermatten in der gewünschten Reihenfolge ablegt.

Die Schweißmaschine weist ein Maschinengestell 3 auf, in dem ein Querhaupt 4 höhenverstellbar angeordnet ist. Das Querhaupt 4 ist mit Hilfe einer Verstelleinrichtung 5, beispielsweise eines Verstellmotors, entsprechend den Richtungen des Doppelpfeiles P2 höhenverstellbar. Mit dem Querhaupt 4 ist ein parallel zur vorderen Schweißlinie S1-S1 verlaufender oberer Elektrodenbalken 6 fest verbunden. Am unteren, freien Ende des oberen Elektrodenbalkens 6 ist je Schweißkopf 1 jeweils ein Schweißzylinder 7 befestigt, dessen Kolbenstange 8 als Elektrodenstößel ausgebildet ist und senkrecht zur Längsdrahtzuführebene Z-Z entsprechend den Richtungen des Doppelpfeiles P3 auf- und ab bewegbar ist. Am freien Ende jedes Elektrodenstößels 8 ist ein oberer Elektrodenhalter 9 mit einer austauschbaren Elektrode 10 befestigt. Am oberen Elektrodenbalken 6 sind mehrere obere Schweißtransformatoren 11 angeordnet, die über einen festen Anschlußbügel 12 sowie ein bewegliches Stromband 12' mit den oberen Elektrodenhaltern 9 elektrisch verbunden sind.

Unterhalb der Längsdrahtzuführebene Z-Z ist ein parallel zur Schweißlinie S1-S1 verlaufender unterer starrer Elektrodenbalken 13 am Maschinengestell 3 angeordnet. Am oberen, freien Ende des unteren Elektrodenbalkens 13 ist je Schweißkopf 1 jeweils ein unterer Elektrodenhalter 14 angebracht, der eine austauschbare Elektrode 15 trägt. Am unteren Elektrodenbalken 13 sind mehrere untere Schweißtransformatoren 16 angeordnet, die über einen festen Anschlußbügel 17 mit den unteren Elektrodenhaltern 14 elektrisch verbunden sind.

Am Querhaupt 4 ist ein parallel zur hinteren Schweißlinie S2-S2 verlaufender oberer Elektrodenbalken 18 angeordnet, der mit Hilfe einer Verstelleinrichtung 19, beispielsweise eines Verstellmotors, entsprechend den Richtungen des Doppelpfeiles P4 in Produktionsrichtung P1 verschiebbar ist. Am unteren freien Ende des unteren Elektrodenbalkens 18 ist je Schweißkopf 2 jeweils ein Schweißzylinder 7' befestigt, dessen Kolbenstange 8' als Elektrodenstößel ausgebildet ist und senkrecht zur Längsdrahtzuführebene Z-Z entsprechend den Richtungen des Doppelpfeiles P3 auf- und ab bewegbar ist. Am freien Ende jedes Elektrodenstößels 8' ist ein oberer Elektrodenhalter 9' mit einer austauschbaren Elektrode 10' befestigt. Über ein bewegliches, oberes Stromband 20 sowie ein weiteres bewegliches Stromband 20' sind die Elektrodenhalter 9' mit den oberen Transformatoren 11 elektrisch verbunden.

Unterhalb der Längsdrahtzuführebene Z-Z ist ein parallel zur Schweißlinie S2-S2 verlaufender unterer Elektrodenbalken 21 am Maschinengestell 3 angeordnet, der mit Hilfe einer Verstelleinrichtung 22, beispielsweise eines Verstellmotors, entsprechend den Richtungen des Doppelpfeiles P4 in Produktionsrichtung P1 verschiebbar ist. Die Verschiebung des unteren Elektrodenbalkens 21 erfolgt gemeinsam mit der Verschiebung des oberen Elektrodenbalkens 18. Im Rahmen der Erfindung ist jedoch auch möglich, die vorderen Schweißköpfe 1, und damit die vordere Schweißlinie S1-S1 verschiebbar auszuführen, wobei die hintere Schweißlinie S2-S2 entweder fest oder ebenfalls verschiebbar ist. Am oberen, freien Ende des unteren Elektrodenbalkens 21 ist je Schweißkopf 2 jeweils ein unterer Elektrodenhalter 14' angebracht, der eine austauschbare Elektrode 15' trägt. Über ein bewegliches, unteres Stromband 23 sind die Elektrodenhalter 14' mit den unteren Transformatoren 16 elektrisch verbunden. Durch die Höhenverstellung des Querhauptes 4 ist es möglich, den jeweiligen Öffnungsspalt zwischen den oberen Elektroden 10, 10' und den unteren Elektroden 15, 15' entsprechend den Drahtstärken der Längs- und Querdrähte zu minimieren, um die Hubwege der Elektrodenstößel 8, 8' so klein wie möglich zu halten.

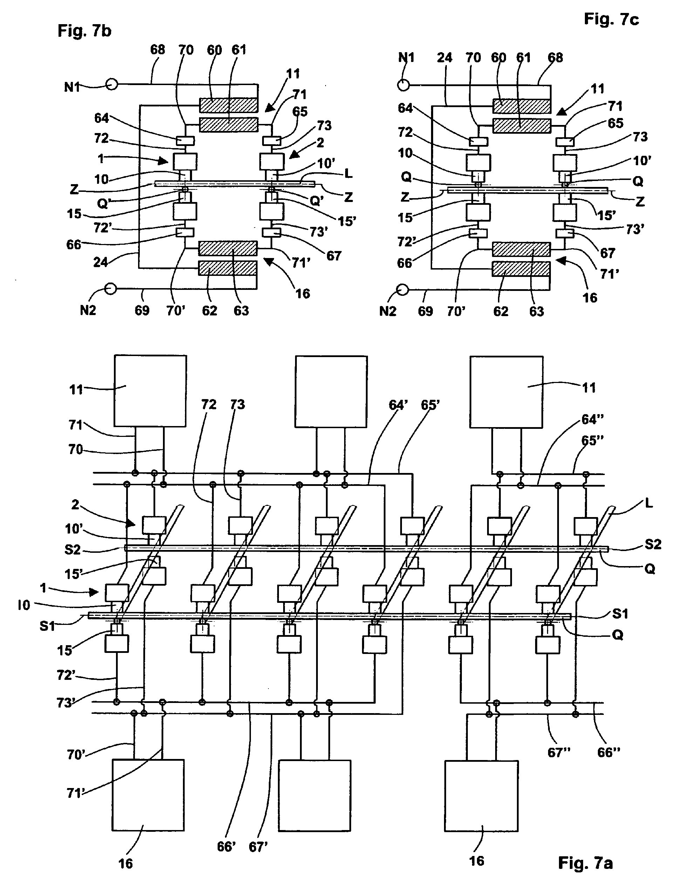

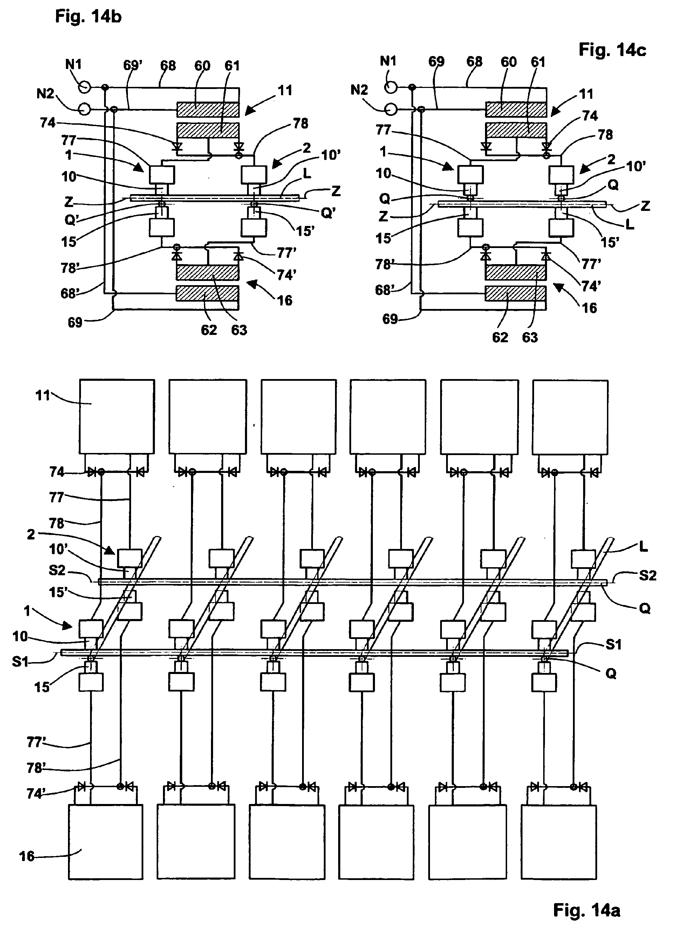

Die oberen Transformatoren 11 sind mit dem Netzanschluß N1, und die unteren Transformatoren 16 mit dem Netzanschluß N2 mit dem Stromnetz verbunden. Im dargestellten Ausführungsbeispiel sind die oberen und die unteren Transformatoren 11, 16 über eine serielle Stromleitung 24 elektrisch miteinander verbunden. Im Rahmen der Erfindung sind jedoch weitere Schaltungsarten der Transformatoren 11, 16, sowie der Spannungsversorgung der Schweißköpfe 1, 2 möglich, die beispielsweise in den Fig. 7a, 7b, 7c bis 14a, 14b, 14c dargestellt und beschrieben sind. In diesen Ausführungsbeispielen sind außerdem mehrere Möglichkeiten der Netzverbindung beschrieben.

Zum Zuführen der Querdrähte Q, Q' in die Schweißlinien S1-S1 und S2-S2 sind zwei Querdrahtzubringeinrichtungen 25, 25' oberhalb und zwei Querdrahtzubringeinrichtungen 26, 26' unterhalb der Längsdrahtzuführebene Z-Z angeordnet, wobei in Produktionsrichtung P1 gesehen die Querdrahtzubringeinrichtungen 25, 26 jeweils vor der Schweißlinie S1-S1 und die Querdrahtzubringeinrichtungen 25', 26' jeweils hinter der Schweißlinie S2-S2 angeordnet sind. Die Querdrahtzubringeinrichtungen 25, 25' und 26, 26' weisen jeweils quer zur Produktionsrichtung P1 und parallel zur Längsdrahtzuführebene Z-Z verlaufende Einschußkanäle K1, K1' für die oberen Querdrahtzuführeinrichtungen 25, 25' und K2, K2' für die unteren Querdrahtzubringeinrichtungen 26, 26' auf, in welche die Querdrähte Q, Q' jeweils von der Seite parallel zu den Schweißlinien S1-S1, S2-S2 eingeschossen werden. Hierbei sind die Einschußkanäle K1, K2 in Produktionsrichtung P1 gesehen vor der vorderen Schweißlinie S1-S1 und die Einschußkanäle K1', K2' hinter der vorderen Schweißlinie S1-S1, jedoch vor der hinteren Schweißlinie S2-S2 angeordnet..Die Querdrahteinschußkanäle K1, K1' verlaufen in oberen Halterungen 27, 27', die jeweils am oberen Elektrodenbalken 6 bzw. am verschiebbaren oberen Elektrodenbalken 18 befestigt sind und außerdem quer zur Produktionsrichtung P1 und parallel zur Längsdrahtzuführebene Z-Z verlaufende drehbare Klappenwellen 28, 28' tragen. Mit den Klappenwellen 28, 28' sind mehrere Einschußklappen 29, 29' drehfest verbunden, die die Einschußkanäle K1, K1' in Richtung der Schweißlinien S1-S1 bzw. S2-S2 öffnen und schließen. Die Querdrahtzubringeinrichtungen 25, 25' weisen mehrere Zubringerarme 30, 30' auf, die an ihrem freien Ende entsprechende Ausnehmungen zur Aufnahme der Querdrähte Q besitzen. Durch entsprechende Bewegung dieser Zubringerarme 30, 30' werden die Querdrähte Q nach Wegschwenken der Einschußklappen 29, 29' entlang der Zubringerbahn B in die Schweißlinien S1-S1 und S2-S2 gefördert. Die Zubringerbahn entspricht der gekoppelten Bewegung zweier Exzenter, wobei eine möglichst minimale Zubringzeit für die Querdrähte erreicht wird. Der besseren Übersicht halber sind in der Fig. 1 nur die unteren Zubringerbahnen B eingezeichnet. Die Zubringerarme 30' greifen durch die Schweißlinie S2-S2, damit die Bewegungsbahn dieser Zubringerarme 30' nicht durch bereits angeschweißte Querdrähte behindert und dadurch die Zubringung der Querdrähte verzögert wird.

Die Querdrahteinschußkanäle K2, K2' verlaufen in unteren Halterungen 31, 31', die jeweils am unteren Elektrodenbalken 13 bzw, am verschiebbaren unteren Elektrodenbalken 21 befestigt sind und außerdem quer zur Produktionsrichtung P1 und parallel zur Längsdrahtzuführebene Z-Z verlaufende drehbare Klappenwellen 32, 32' tragen. Mit den Klappenwellen 32, 32' sind mehrere Einschußklappen 33, 33' drehfest verbunden, die die Einschußkanäle K2, K2' in Richtung der Schweißlinien S1-S1 bzw. S2-S2 öffnen und schließen. Die Querdrahtzubringeinrichtungen 26, 26' weisen mehrere Zubringerarme 34, 34' auf, die an ihrem freien Ende entsprechende Ausnehmungen zur Aufnahme der Querdrähte Q, Q' besitzen. Hierbei greifen die Zubringerarme 34' durch die Schweißlinie S2-S2. Durch entsprechende Bewegung dieser Zubringerarme 34, 34' werden die Querdrähte Q, Q' nach Wegschwenken der Einschußklappen 33, 33' entlang der Zubringerbahn B in die Schweißlinien S1-S1 und S2-S2 gefördert. Alle Zubringeinrichtungen 25, 25'; 26, 26' sind auf Montagebalken angeordnet, die es ermöglichen, die Zubringeinrichtungen 25, 25'; 26, 26' aus dem Wirkungsbereich der Schweißköpfe 1, 2, z.B. für Servicezwecke, herauszuschwenken.

Zur Steuerung der Schweißmaschine ist eine Steuereinrichtung vorgesehen, die im wesentlichen die Zufuhr der Längs- und Querdrähte, das taktweise Heben und Senken der Elektrodenstößel, die Ansteuerung der Schweißdruck- und Schweißstromversorgung, sowie den Abtransport der fertig geschweißten Drahtgittermatten aus den Schweißlinien, das Abtrennen der Drahtgittermatten von der Materialbahn und das Stapeln der abgetrennten Drahtgittermatten steuert. Insbesondere ist ein Steuerprogramm vorgesehen, das die gewünschte Reihenfolge der von oben bzw. von unten zuzuführenden Querdrähte Q, Q' in Abhängigkeit von geforderten Typ der herzustellenden Drahtgittermatten vorgibt.

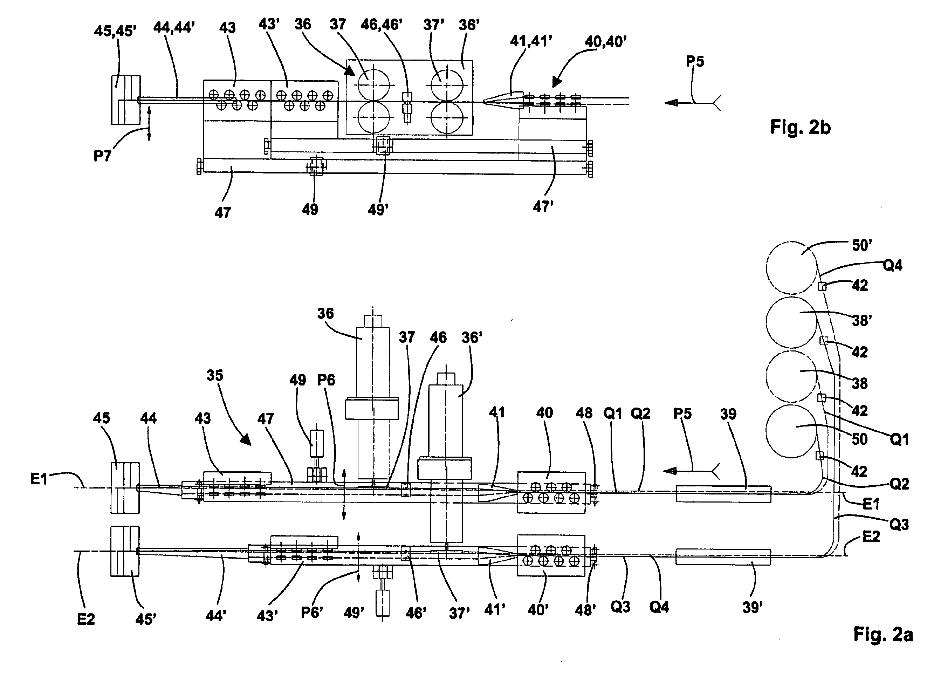

Die in den Fig. 2a und 2b schematisch in Draufsicht und Seitenansicht dargestellte Querdrahtzuführeinrichtung 35 weist zwei Einschußlinien E1 und E2 auf, um gleichzeitig zwei Querdrähte Q1, Q3 oder Q2, Q4 in die Schweißkanäle K1, K1' bzw. K2', K2' einführen zu können. Mit Hilfe einer Vorschubeinrichtung 36, die in beiden Richtungen antreibbare, anstellbare Vorschubräder 37 aufweist, wird ein Querdraht Q1 in Zuführrichtung P5 von einer Vorratsspule 38 über einen Drahtspeicher 39, eine einlaufseitige Richteinrichtung 40 und eine einlaufseitige Drahtführung 41 abgezogen. Im Bereich der Vorratspule 38 ist ein Drahtsensor 42 angebracht, der das Vorhandensein eines Drahtes in der Materialbahn überwacht. Der Vorschubeinrichtung 36 ist eine auslaufseitige Richteinrichtung 43 nachgeschaltet. Die Querdrahtzuführeinrichtung 35 führt entlang der Einschußlinie E1 die Querdrähte Q1, Q2 einer nachgeschalteten auslaufseitigen Drahtführung 44 und einer Schneideinrichtung 45 zu. Im Bereich der Vorschubeinrichtung 36 ist eine Klemmeinrichtung 46 zum Festklemmen des Querdrahtes Q1 oder Q2 vorgesehen. Die einlaufseitige Richteinrichtung 40, die einlaufseitige Drahtführung 41, die auslaufseitige Richteinrichtung 43, sowie die Klemmeinrichtung 46 sind auf einem Schwenkrahmen 47 angeordnet, der in einem Drehzapfen 48 gelagert ist und mit Hilfe eines Schwenkzylinders 49 entsprechend den Richtungen des Doppelpfeiles P6 schwenkbar ist. Die Schneideinrichtung 45 ist am Maschinengestell 3 entsprechend den Richtungen des Doppelpfeiles P7 schwenkbar angeordnet, wobei die auslaufseitige Drahtführung 44 die auslaufseitige Richteinrichtung 43 mit der Schneideinrichtung 45 verbindet und derart gelenkig mit der Richteinrichtung 43 verbunden ist, daß sie die Schwenkbewegung P7 der Schneideinrichtung 45 mitmachen kann.

Die Einschußlinie E1 wird zusätzlich mit einem zweiten Querdraht Q2 beschickt, der von einer Reservevorratspule 50 abgezogen wird. Dieser Querdraht Q2 wird mit Hilfe der Klemmeinrichtung 46 in zweiter Spur als Reserve parallel zum Querdraht Q1 festgeklemmt und reicht mit seinem vorderen Ende bis zur auslaufseitigen Drahtführung 44. Um beide Querdrähte Q1, Q2 verarbeiten zu können, sind die einlaufseitige Richteinrichtung 40, die auslaufseitige Richteinrichtung 43, sowie die Klemmeinrichtung 46 als Doppelspureinrichtungen ausgelegt.

Zum Beschicken der Einschußlinie E2 mit Querdrähten Q3, Q4 sind Einrichtungen vorgesehen, die den Einrichtungen der Einschußlinie E1 entsprechen, wobei die entsprechenden Einrichtungen gleiche, mit einem Apostroph versehene Bezugszeichen haben. Zur Eindämmung des Lärmes ist die Querdrahtzuführeinrichtung 35 ist mit einer Schallschutzeinrichtung, beispielsweise einer Schallschutzhaube, versehen.

Die erfindungsgemäße Querdrahtzuführeinrichtung 35 arbeitet in folgender Weise:

Der mit Hilfe der Vorschubeinrichtung 36 von der Vorratsspule 38 abgezogene Querdraht Q1 wird über einen nicht dargestellten Umlenkbogen in den Drahtspeicher geführt, dessen Speicherkapazität so groß ist, daß bei Leerlaufen der Vorratsspule 38 noch Drahtmaterial für mindestens einen Querdraht zur Verfügung steht. In der einlaufseitigen Richteinrichtung 40 wird der Querdraht Q1 gerade gerichtet, wobei die Richteinrichtung 40 vorzugsweise aus zwei Reihen von gegenüberliegenden, versetzt zueinander angeordneten, in einer Richtebene liegenden Richtrollen besteht. Um auch den Reserve-Querdraht Q2 richten zu können, weist die Richteinrichtung 40 eine weitere, parallele Richtebene mit entsprechenden Richtrollen auf. Im dargestellten Ausführungsbeispiel sind die Richtrollen als Doppelrollen ausgeführt, wobei alle Rollen dieser Doppelrollen individuell drehbar und einstellbar gelagert sind. Die Vorschubeinrichtung 36 schiebt den Querdraht Q1 dann entlang der Einschußlinie E1 in die auslaufseitige Richteinrichtung 43, die analog zur einlaufseitigen Richteinrichtung 40 aufgebaut ist, deren Richtebenen jedoch um 90 Grad gedreht sind. Die auslaufseitige Drahtführung 44 führt den Querdraht Q1 durch die Schneideinrichtung 45 je nach geforderter Anordnung der Querdrähte in der herzustellenden Drahtgittermatte entweder in den oberen Einschußkanal K1 oder in den unteren Einschußkanal K2. Die auslaufseitige Drahtführung 44 und die Schneideinrichtung 45 sind entsprechend den Richtungen des Doppelpfeiles P7 gemeinsam senkrecht zur Längsdrahtzuführebene Z-Z schwenkbar, um die Einschußlinie E1 alternativ mit den Einschußkanälen K1 bzw. K2 in Fluchtlinie zu bringen. Die Schneideinrichtung 45 trennt den Querdraht Q1 in wählbarer Länge vom zugeführten Materialstrang ab. Sobald die Querdrähte Q bzw. Q' in dem jeweiligen Einschußkanal K1 bzw. K2 zur Ruhe gekommen sind, werden sie von den Zubringerarmen 30, 34 in die Schweißlinie S1-S1 gefördert.

Wenn der Drahtsensor 42 meldet, daß der Materialvorrat der Vorratspule 38 aufgebraucht ist, oder ein Durchmesserwechsel des Querdrahtes erforderlich ist, wird der Materialvorschub für den Querdraht Q1 gestoppt und durch Umkehr der Förderrichtung der Vorschubrichtung 36 wird der restliche Draht gegen die Zuführrichtung P5 so weit zurückgezogen, bis sein vorderes Ende bis zur auslaufseitigen Drahtführung 44 reicht. In dieser Stellung wird der Querdraht Q1 durch die Klemmeinrichtung 46 festgehalten. Anschließend öffnen sich die Vorschubräder 37 der Vorschubeinrichtung 36, und der Schwenkrahmen 47 schwenkt in der entsprechenden Richtung des Doppelpfeiles P6 den Querdraht Q2 in den Arbeitsbereich der Vorschubräder 37. Nach dem Schließen der Vorschubräder 37 wird die Klemmung des Querdrahtes Q2 geöffnet und der Querdraht Q2 steht zur Beschickung der Einschußkanäle K1 bzw. K2 bereit.

In analoger Weise erfolgt die Beschickung der Einschußkanäle K1' und K2' mit Querdrähten Q3 bzw. Q4. Die Förderung der Querdrähte Q, Q' von den Einschußkanälen K1', K2' in die entsprechenden Schweißlinie S2-S2 erfolgt hierbei durch die Zubringerarme 30', 34'.

Wie bereits oben beschrieben, können im Rahmen der Erfindung die Querdrähte oberhalb Q und unterhalb Q' der Längsdrahtschar L angeordnet sein, wobei innerhalb einer Drahtgittermatte alle Kombinationen dieser Querdrahtanordnungen möglich sind. Im Rahmen der Erfindung können also je Drahtgittermatte entweder nur die oberen Einschußkanäle K1, K1' oder nur die unteren Einschußkanäle K2, K2', sowie abwechselnd der obere Einschußkanal K1 und der unterer Einschußkanal K2' oder abwechselnd der untere Einschußkanal K2 und der obere Einschußkanal K1' mit Querdrähten beschickt werden. Werden die Querdrähte nacheinander folgender Drahtgittermatten abwechselnd jeweils oberhalb und unterhalb an die Längsdrähte L angeschweißt, ist ein Stapeln der fertig geschweißten Drahtgittermatten ohne Wenden der Drahtgittermatten möglich. Zur Herstellung von Drahtgittermatten mit gegenüberliegenden Querdrähten mit einem Dreifachschweißknoten werden zunächst alle Einschußkanäle K1, K2 sowie K1', K2' mit Querdrähten beschickt, bevor diese zum Verschweißen mit den Längsdrähten in die entsprechenden Schweißlinien S1-S1, S2-S2 gefördert werden.

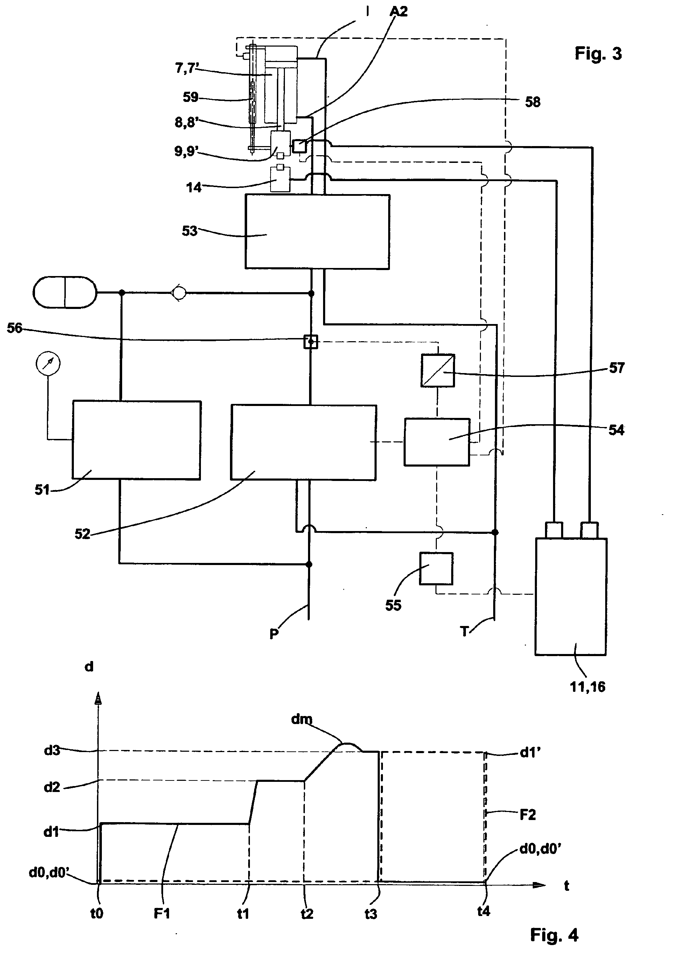

In Fig. 3 ist schematisch eine Steuer- und Regeleinrichtung dargestellt, die zur Versorgung der Schweißzylinder 7, 7' mit dem zum Verschweißen der Längs- und Querdrähte benötigten Schweißdruck dient. Die Steuer- und Regeleinrichtung weist als für die Schweißdruckversorgung wesentliche Hydraulikelemente je Schweißzylinder 7, 7' ein einstellbares Druckminderventil 51, ein ansteuerbares Servoventil 52, sowie ein von der Schweißmaschinensteuerung taktweise ansteuerbares 4/3-Wegeventil 53 auf. Das 4/3-Wegeventil 53 ist jeweils mit dem Druckanschluß Al der Kolbenbodenseite der Schweißzylinder 7, 7' und mit dem Druckanschluß A2 der Kolbenstangenseite der Schweißzylinder 7, 7' verbunden. Die Regelung des Druckverlaufes in den Schweißzylindern 7, 7' erfolgt mit Hilfe einer Regeleinrichtung 54, die außerdem über eine Transformatoransteuerung 55 die entsprechenden, in Fig. 3 nur schematisch angedeuteten Schweißtransformatoren 11, 16 ansteuert. Die Steuer- und Regeleinrichtung weist außerdem einen Drucksensor 56 samt Druck/ Spannungswandler 57, eine Strommeßeinrichtung 58 und eine Einrichtung 59 zur Messung des Hubweges der oberen Elektrodenhalter 9, 9' auf. Der Drucksensor 56, die Strommeßeinrichtung 58 und die Wegmeßeinrichtung 59 liefern die zur Steuerung und Regelung der Steuer- und Regeleinrichtung erforderlichen Meßwerte. Eine nicht dargestellte Meßeinrichtung zur Erfassung der Schweißkraft liefert zusätzliche Meßwerte zur Steuerung und Regelung der Steuer- und Regeleinrichtung. Zur Vereinfachung der Steuerung müssen nicht alle oben genannten Meßeinrichtungen vorhanden sein. Im Rahmen der Erfindung ist eine Steuerung z.B. über Zeitglieder ebenfalls möglich.

Die erfindungsgemäße Steuer- und Regeleinrichtung arbeitet in folgender Weise:

Von einem Hydraulikaggregat wird über eine Pumpenleitung P die Hydraulikflüssigkeit in der benötigten Menge und dem erforderlichen Druck zur Verfügung gestellt, wobei beispielsweise für einen Drahtdurchmesserbereich von 3 bis 8 mm der zu verschweißenden Drähte der maximale Betriebsdruck ca. 120 bar beträgt. Wie in Fig. 4 dargestellt, ist vor Beginn des Schweißzyklus das 4/3-Wegeventil 53 derart geschaltet, daß die Anschlüsse A1, A2 drucklos sind, d.h. die Druckwerte d0 bzw. d0' sind Null. Zu Beginn des Schweißzyklus t0 schaltet das 4/3-Wegeventil 53 derart, daß der Druckanschluß A1 der Kolbenbodenseite der Schweißzylinder 7, 7' sofort mit dem durch das Druckminderventil 51 begrenzten Hydraulikdruck d1 beaufschlagt wird, wodurch sich die Elektrodenstößel 8, 8' aus ihrer oberen Ruhestellung in der entsprechenden Richtung des Doppelpfeiles P3 absenken. Bei Drahtdurchmessern im Bereich von 3 bis 8 mm beträgt dieser Hydraulikdruck d1 z.B. ca. 40 bar. Bei größeren oder kleineren zu verschweißenden Drahtdurchmessern sind die genannten Hydraulikdrücke entsprechend anzupassen. Der Druckverlauf am Druckanschluß A1 der Kolbenbodenseite der Elektrodenstößel 8, 8' ist in der Kurve F1 schematisch dargestellt. Nach dem Aufsetzen t1 der Elektrodenstößel 8, 8' auf dem jeweiligen Kreuzungspunkt zwischen Längs- und Querdraht steigt der Druck am Druckanschluß A1 der Kolbenbodenseite der Schweißzylinder 7, 7' stetig an, bis er den zum Schweißbeginn notwendigen minimalen Schweißdruck d2 erreicht. Nach einer kleinen Zeitverzögerung steuert die Regeleinrichtung 54 das Servoventil 52 derart an, daß der Schweißdruck entsprechend den mechanisch-technologischen Werten der zu verschweißenden Drähte, insbesondere in Abhängigkeit von den Drahtdurchmessern, in einer wählbaren Funktion gesteigert wird, bis der Schweißdruck seinen Endwert d3 erreicht. Dieser Endwert d3 ist abhängig vom Drahtdurchmesserbereich der zu verschweißenden Drähte und beträgt beispielsweise 120 bar. Hierbei hat es sich als vorteilhaft erwiesen, den Schweißdruck kurzzeitig über diesen Endwert d3 auf einen größeren Maximalwert dm zu steigern. Nach Ende der wählbaren Schweißzeit t3 wird das 4/3-Wegeventil 53 derart geschaltet, daß der Arbeitsdruck am Druckanschluß A1 der Kolbenbodenseite des Schweißzylinders 7 sofort auf den Endwert d0 gleich Null absinkt, während gleichzeitig zum raschen Heben der Elektrodenstößel 8, 8' in der entsprechenden Richtung des Doppelpfeiles P3 der Druckanschluß A2 der Kolbenstangenseite der Schweißzylinder 7, 7' rasch mit dem maximalen Arbeitsdruck d1' beaufschlagt wird. Der Druckverlauf am Druckanschluß A2 der Kolbenstangenseite der Schweißzylinder 7, 7' ist in der Kurve F2 schematisch dargestellt. Nach dem erfolgten Heben der Elektrodenstößel 8, 8' in ihre obere Ruhestellung ist der Endzeitpunkt t4 des Schweißzyklus erreicht, so daß auch der Arbeitsdruck am Druckanschluß A2 der Kolbenstangenseite der Schweißzylinder 7, 7' auf den Endwert d0' gleich Null abgesenkt werden kann. Zum Fertigstellen der Drahtgittermatte schließen sich weitere entsprechende Schweißzyklen an.

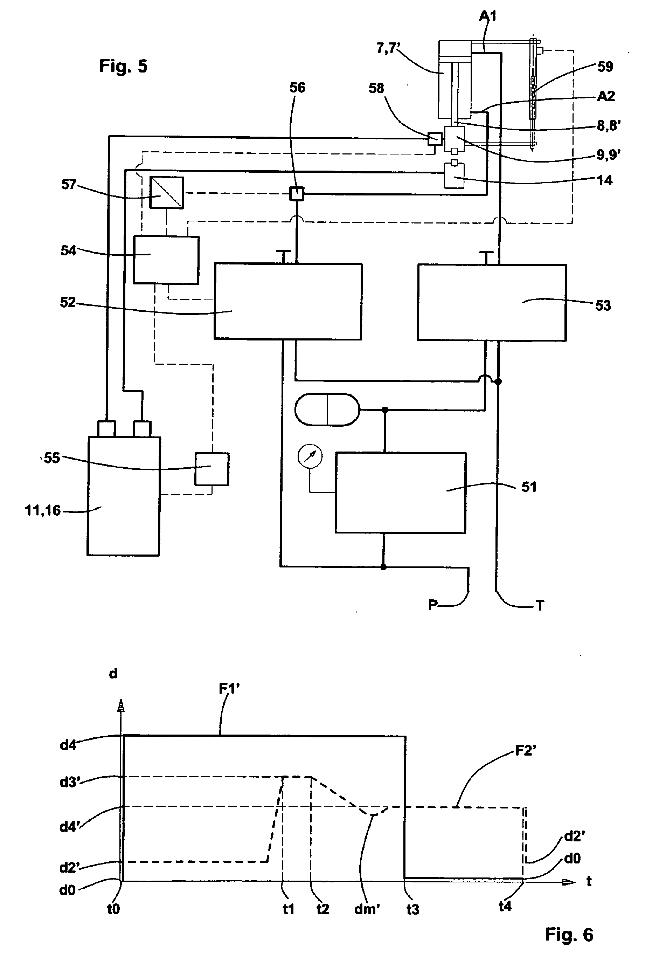

In Fig. 5 ist schematisch ein weiteres Ausführungsbeispiel einer Steuer- und Regeleinrichtung dargestellt, die zur Versorgung der Schweißzylinder 7, 7' mit dem zum Verschweißen der Längs- und Querdrähte benötigten Schweißdruck dient. Diese Steuer- und Regeleinrichtung weist die gleichen Einrichtungen auf, wie das in Fig. 3 dargestellte Ausführungsbeispiel, wobei die Ansteuerung der einzelnen Hydraulikelemente, sowie die Druckbeaufschlagung des Schweißzylinders 7 jedoch nach dem sog. Gegendruckverfahren erfolgen:

Wie in Fig. 6 dargestellt, ist vor Beginn des Schweißzyklus das 4/3-Wegeventil 53 derart geschaltet, daß der Druck d0 am Druckanschluß A1 der Kolbenbodenseite der Elektrodenstößel 8, 8' gleich Null ist, während am Druckanschluß A2 der Kolbenstangenseite der Schweißzylinder 7, 7' ein gewisser Restdruck d2' ansteht, um die Elektrodenstößel 8, 8' oben zu halten. Zu Beginn des Schweißzyklus t0 schaltet das 4/3-Wegeventil 53 derart, daß der Druckanschluß A1 der Kolbenbodenseite der Schweißzylinder 7, 7' sofort mit dem maximalen Hydraulikdruck d4 beaufschlagt wird, wodurch sich die Elektrodenstößel 8, 8' aus ihrer oberen Ruhestellung in der entsprechenden Richtung des Doppelpfeiles P3 absenken. Bei Drahtdurchmessern im Bereich von 3 bis 8 mm beträgt dieser Hydraulikdruck d4 z.B. ca. 120 bar. Bei größeren oder kleineren zu verschweißenden Drahtdurchmessern sind die genannten Hydraulikdrücke ebenfalls entsprechend anzupassen. Der Druckverlauf am Druckanschluß A1 der Kolbenbodenseite der Schweißzylinder 7, 7' ist in der Kurve F1' schematisch dargestellt. Der Druckverlauf am Druckanschluß A2 der Kolbenstangenseite der Schweißzylinder 7, 7' ist in der Kurve F2' schematisch dargestellt. Die Druckdifferenz zwischen d4 und d2' bewirkt, daß eine rasche Zustellbewegung der Elektrodenstößel 8, 8' erfolgt. Um die Aufsetzgeschwindigkeit der Elektrodenstößel 8, 8' zu verringern und dadurch etwaige Beschädigungen der Drähte durch die obere Elektrode 10, 10' zu vermeiden, wird nach einer wählbaren Zeit das Servoventil 52 derart geschaltet, daß der Druckanschluß A2 der Kolbenstangenseite der Schweißzylinder 7, 7' solange mit einem wählbaren Druck beaufschlagt wird, bis die obere Elektrode 10, 10' im Zeitpunkt t1 auf dem Kreuzungspunkt zwischen Längs- und Querdraht aufsetzt und der gewünschte Arbeitsdruck d3' am Druckanschluß A2 der Kolbenstangenseite der Schweißzylinder 7, 7' erreicht ist. Durch diese gesteuerte Reduktion auf die Druckdifferenz zwischen d4 und d3' wird die Absenkbewegung der Elektrodenstößel 8, 8' eingebremst, wodurch ein sanftes Aufsetzen der Elektroden 10, 10' auf die Kreuzungspunkte der Drähte erreicht wird. Der zu Beginn der Schweißung notwendige minimale Schweißdruck ergibt sich aus der Differenz des Drukkes d4 am Druckanschluß Al der Kolbenbodenseite der Schweißzylinder 7, 7' und dem Druck d3' am Druckanschluß A2 der Kolbenstangenseite der Schweißzylinder 7, 7'. Entsprechend den mechanisch-technologischen Werten der zu verschweißenden Drähte, insbesondere in Abhängigkeit von den Drahtdurchmessern, wird der Druck am Druckanschluß A2 der Kolbenstangenseite der Schweißzylinder 7, 7' in einer wählbaren Funktion auf einen Wert d4' vermindert, bis der Schweißdruck als Differenz zwischen den Werten d4 und d4' seinen erforderlichen Endwert erreicht hat. Hierbei hat es sich als vorteilhaft erwiesen, durch entsprechende Verminderung des Druckes am Druckanschluß A2 der Kolbenstangenseite der Schweißzylinder 7, 7' den Schweißdruck kurzzeitig über diesen Endwert auf einen größeren Maximalwert dm zu steigern. Nach Ende der wählbaren Schweißzeit t3 wird das 4/3-Wegeventil 53 derart geschaltet, daß der Arbeitsdruck am Druckanschluß A1 der Kolbenbodenseite der Schweißzylinder 7, 7' sofort auf den Endwert d0 gleich Null absinkt, während zum raschen Heben der Elektrodenstößel 8, 8' in der entsprechenden Richtung des Doppelpfeiles P3 der Druckanschluß A2 der Kolbenstangenseite der Schweißzylinder 7, 7' weiterhin mit dem Arbeitsdruck d4' beaufschlagt bleibt. Nach dem erfolgten Heben der Elektrodenstößel 8, 8' in ihre obere Ruhestellung ist des Endzeitpunkt t4 des Schweißzyklus erreicht, so daß auch der Arbeitsdruck am Druckanschluß A2 der Kolbenstangenseite der Schweißzylinder 7, 7' auf den Endwert d2' abgesenkt werden kann. Zum Fertigstellen der Drahtgittermatte schließen sich weitere entsprechende Schweißzyklen an.

Die beschriebenen Ausführungsbeispiele einer Steuer- und Regeleinrichtung für den Schweißzyklus und Schweißdruck sind für alle Drahtdurchmesserbereiche einsetzbar. Die Ausführung gemäß den Fig. 5, 6 hat insbesondere bei dünneren Drahtdurchmessern den Vorteil, daß die Aufsetzbewegung der Elektrodenstößel 7 abgebremst werden kann, wodurch ein sanftes Aufsetzen der oberen Elektroden 10, 10' auf die Kreuzungspunkte der Drähte erfolgt.

In den Fig. 7a, 7b, 7c ist schematisch ein Ausführungsbeispiel einer Schweißstromversorgung für die Schweißelektroden dargestellt, wobei die Fig. 7b und 7c sich nur dadurch unterscheiden, daß in Fig. 7b die Querdrähte oberhalb Q und in Fig. 7c unterhalb Q' der Längsdrähte L angeordnet sind. Die Schweißmaschine arbeitet nach dem Doppelpunktschweißverfahren, wobei die Doppelpunktschweißung in Längsdrahtrichtung erfolgt und zwei Querdrähte gleichzeitig mit der Längsdrahtschar L verschweißt werden. Dieses Verfahren hat den Vorteil, daß bei Änderung der Längsdrahtteilung kein Umpolen der Elektrodenhalter notwendig ist. Zur Schweißstromversorgung der Schweißköpfe 1, 2 werden jeweils ein oberer und ein unterer Transformator 11, 16 paarweise zusammengeschaltet. Diese Verfahrensweise gilt für alle nachfolgend beschriebenen Ausführungsbeispiele der Erfindung. Im Rahmen der Erfindung ist es jedoch auch möglich, nur einen Querdraht mit der Längsdrahtschar L zu verschweißen. Hierbei wird weiterhin im Doppelpunktverfahren geschweißt, wobei die Elektroden der nicht mit Querdrähten bestückte Schweißlinie direkt auf den Längsdrähten L aufsetzen. Diese Arbeitsweise ist jedoch nur in Ausnahmefällen erwünscht, beispielsweise bei Produktionsbeginn oder bei Ausfall einer Querdrahtzuführeinrichtung.

Die oberen Transformatoren 11 bestehen aus einer Primärwicklung 60 und einer Sekundärwicklung 61. In gleicher Weise sind die unteren Transformatoren 16 aufgebaut und weisen eine entsprechende Primärwicklung 62 und eine Sekundärwicklung 63 auf. Zur Stromversorgung der Schweißköpfe 1, 2 ist ein Sammelschienensystem vorgesehen, das aus zwei oberen Sammelschienen 64, 65 und zwei unteren Sammelschienen 66, 67 besteht. Im Rahmen der Erfindung ist es möglich, die jeweiligen Sammelschienen 64, 65; 66, 67 einstückig auszubilden oder in mehrere Teilstücke 64' , 64" ; 65', 65" bzw. 66', 66"; 67' , 67" aufzuteilen. Die Aufteilung in mehrere-Teilstücke hat den Vorteil, daß die Teilstücke separat ansteuerbar sind.

Bei diesem Ausführungsbeispiel sind die Primärwicklungen 60 der oberen Transformatoren 11 über die Stromleitung 24 jeweils paarweise in Serie mit den Primärwicklungen 62 der unteren Transformatoren 16 verbunden. Die Primärwicklungen 60 der oberen Transformatoren 11 sind mit einer Netzverbindung 68 mit dem Netzanschluß N1, und die Primärwicklungen 62 der unteren Transformatoren 16 mit einer Netzverbindung 69 mit dem Netzanschluß N2 verbunden. Die Sekundärwicklungen 61 der oberen Transformatoren 11 sind über Stromverbindungen 70, 71 mit der jeweiligen oberen Sammelschiene 64; 65 verbunden. Die Sekundärwicklungen 63 der unteren Transformatoren 16 sind über Stromverbindungen 70', 71' mit der jeweiligen unteren Sammelschiene 66; 67 verbunden. Im Rahmen der Erfindung ist es möglich, daß die Sammelschienen 64, 65; 66, 67 bzw. die Teilstükke 64', 64"; 65', 65" bzw. 66', 66"; 67', 67" jeweils von einem oder mehreren Transformatorpaaren 11, 16 mit Strom versorgt werden. Um eine gleichmäßige Verteilung der Last auf das Versorgungsnetz zu erreichen, sind die Transformatoren 11, 16 auf die drei Phasen des Versorgungsnetzes entsprechend verteilt. Die Sammelschienen 64, 66 versorgen die vorderen Schweißköpfe 1, und die Sammelschienen 65, 67 die hinteren Schweißköpfe 2 mit Schweißstrom, wobei die jeweils in Längsdrahtrichtung hintereinander angeordneten Schweißköpfe 1, 2 der Schweißlinien S1-S2, S1-S2 paarweise zusammengeschaltet sind. Hierbei sind die Sammelschiene 64 über die Stromverbindung 72 mit den oberen Elektroden 10 der vorderen Schweißköpfe 1, und die Sammelschiene 66 über die Stromverbindung 72' mit den unteren Elektroden 15 der vorderen Schweißköpfe 1, sowie die Sammelschiene 65 über die Stromverbindung 73 mit den oberen Elektroden 10' der hinteren Schweißköpfe 2, und die Sammelschiene 67 über die Stromverbindung 73' mit den unteren Elektroden 15' der hinteren Schweißköpfe 2 elektrisch verbunden.

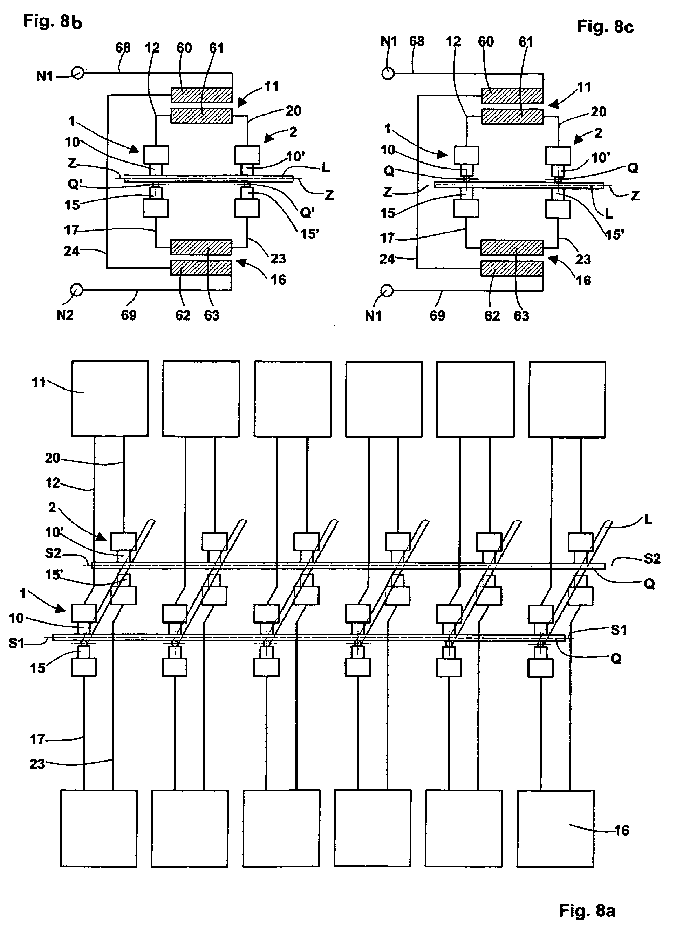

In den Fig. 8a, 8b, 8c ist schematisch ein weiteres Ausführungsbeispiel einer Wechselstromversorgung für die Schweißköpfe 1, 2 dargestellt, wobei die Fig. 8b und 8c sich nur dadurch unterscheiden, daß in Fig. 8b die Querdrähte oberhalb Q und in Fig. 8c unterhalb Q' der Längsdrähte L angeordnet sind. Die oberen Transformatoren 11 bestehen aus einer Primärwicklung 60 und einer Sekundärwicklung 61. In gleicher Weise sind die unteren Transformatoren 16 aufgebaut und weisen eine entsprechende Primärwicklung 62 und eine Sekundärwicklung 63 auf. Die Ausführung der Transformatoren 11, 16, deren Netzanbindung sowie deren serielle Verbindung entspricht dem Ausführungsbeispiel der Fig. 7a, 7b, 7c. Beim dargestellten Ausführungsbeispiel werden die jeweils in Längsdrahtrichtung hintereinander angeordneten Schweißköpfe 1, 2 der Schweißlinien S1-S2, S1-S2 als in Längsdrahtrichtung wirkendes Doppelpunktpaar jedoch direkt von je einem Transformatorpaar 11; 16 mit Schweißstrom versorgt. Hierbei sind die Sekundärwicklungen 61 der oberen Transformatoren 11 über die Stromverbindung 12 direkt mit der oberen Elektrode 10 des vorderen Schweißkopfes 1 und mit der oberen Elektrode 10' des hinteren Schweißkopfes 2 elektrisch verbunden. Die Sekundärwicklungen 63 der unteren Transformatoren 16 sind über die Stromverbindung 17 direkt mit der unteren Elektrode 15 des vorderen Schweißkopfes 1 und mit der unteren Elektrode 15' des hinteren Schweißkopfes 2 elektrisch verbunden. Um eine gleichmäßige Verteilung der Last auf das Versorgungsnetz zu erreichen, sind die Transformatoren 11, 16 auf die drei Phasen des Versorgungsnetzes entsprechend verteilt.

Das in den Fig. 8a, 8b, 8c beschriebene Ausführungsbeispiel hat gegenüber dem Ausführungsbeispiel der Fig. 7a, 7b, 7c den Vorteil, daß eine getrennte Regelung pro Transformatorphase, sowie die getrennte Ansteuerung einzelner Transformatorpaare möglich ist. Das Ausführungsbeispiel der Fig. 7a, 7b, 7c hat demgegenüber den Vorteil, daß eine höhere Leistung erzielt werden kann, und daß der Wechsel der Längsdrahtteilungen flexibler und einfacher ist.

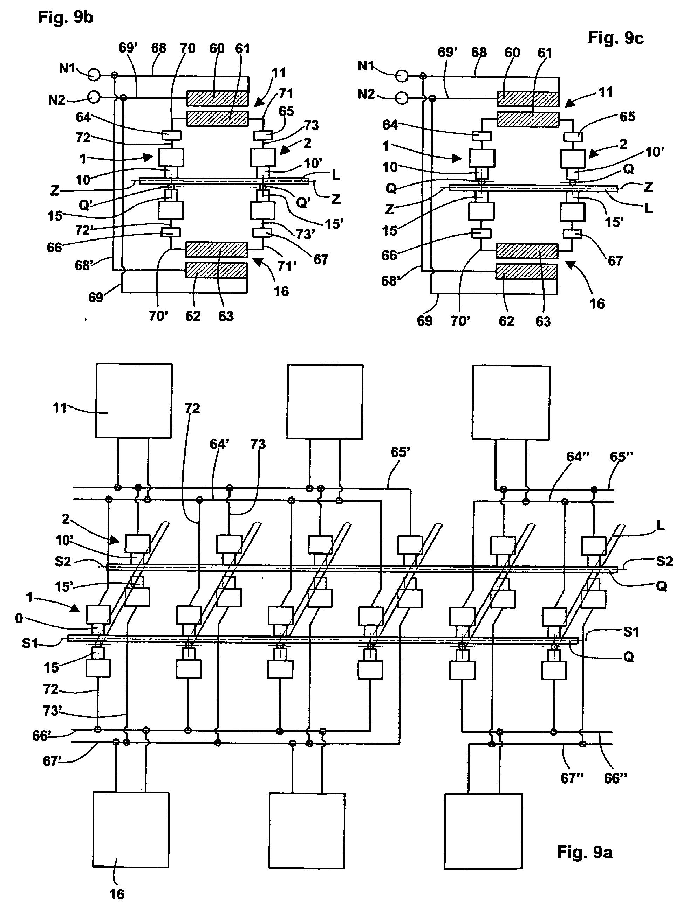

In den Fig. 9a, 9b, 9c ist schematisch ein weiteres Ausführungsbeispiel einer Wechselstromversorgung für die Schweißköpfe 1, 2 dargestellt, wobei die Fig. 9b und 9c sich nur dadurch unterscheiden, daß in Fig. 9b die Querdrähte oberhalb Q und in Fig. 9c unterhalb Q' der Längsdrähte L angeordnet sind. Die oberen Transformatoren 11 bestehen wiederum aus einer Primärwicklung 60 und einer Sekundärwicklung 61. In gleicher Weise sind die unteren Transformatoren 16 aufgebaut und weisen eine Primärwicklung 62 und eine Sekundärwicklung 63 auf. Bei diesem Ausführungsbeispiel sind die Primärwicklungen 60, 62 der oberen und unteren Transformatoren 11, 16 paarweise jeweils parallel mit den Netzanschlüssen N1, N2 verbunden. Hierbei sind die Primärwicklungen 60 der oberen Transformatoren 11 über die Stromverbindungen 68 mit dem Netzanschluß N1 und über die Stromverbindungen 69' mit dem Netzanschluß N2 elektrisch verbunden, während die Primärwicklungen 60 der unteren Transformatoren 16 über die Stromverbindungen 68' mit dem Netzanschluß N1 und über die Stromverbindungen 69 mit dem Netzanschluß N2 elektrisch verbunden sind. Zur Versorgung der Schweißköpfe 1, 2 kommt bei diesem Ausführungsbeispiel wiederum das in den Fig. 7a, 7b, 7c beschriebene Sammelschienensystem zur Anwendung. Dieses Ausführungsbeispiel ermöglicht eine höhere Schweißleistung, hat jedoch den Nachteil, daß über die Längsdrähte höhere Ausgleichströme fließen.

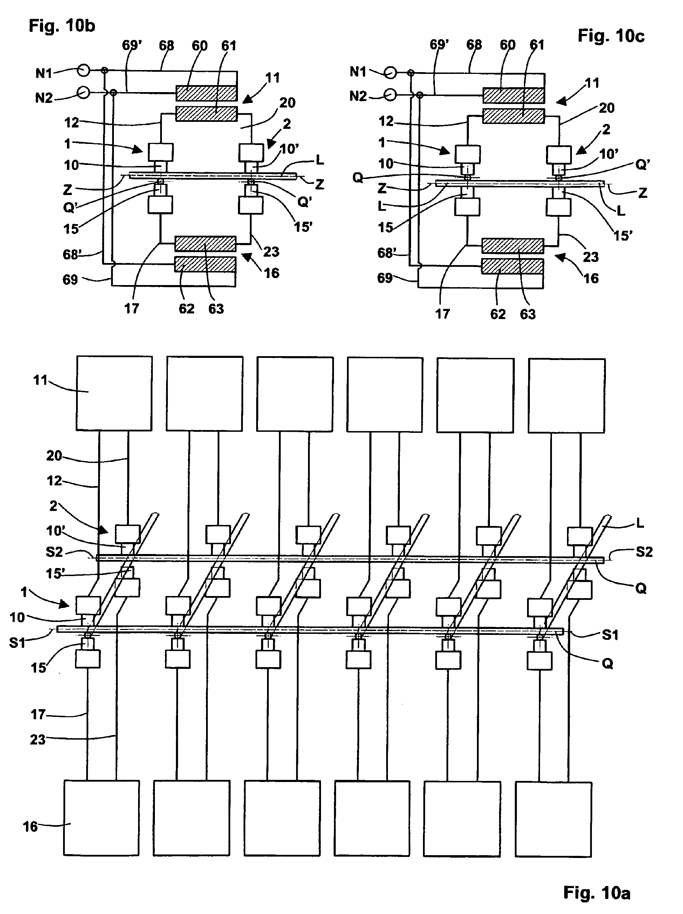

In den Fig. 10a, 10b, 10c ist schematisch ein weiteres Ausführungsbeispiel einer Wechselstromversorgung für die Schweißköpfe 1, 2 dargestellt, wobei die Fig. 10b und 10c sich nur dadurch unterscheiden, daß in Fig. 10b die Querdrähte oberhalb Q und in Fig. 10c unterhalb Q' der Längsdrähte L angeordnet sind. Die Ausführung der Transformatoren 11, 16, deren Netzanbindung sowie deren parallele Verbindung entspricht dem Ausführungsbeispiel der Fig. 9a, 9b, 9c. Die Stromversorgung der Schweißköpfe 1, 2 erfolgt jedoch direkt von den Transformatorpaaren 11, 16 und entspricht dem Ausführungsbeispiel der Fig. 8a, 8b, 8c.

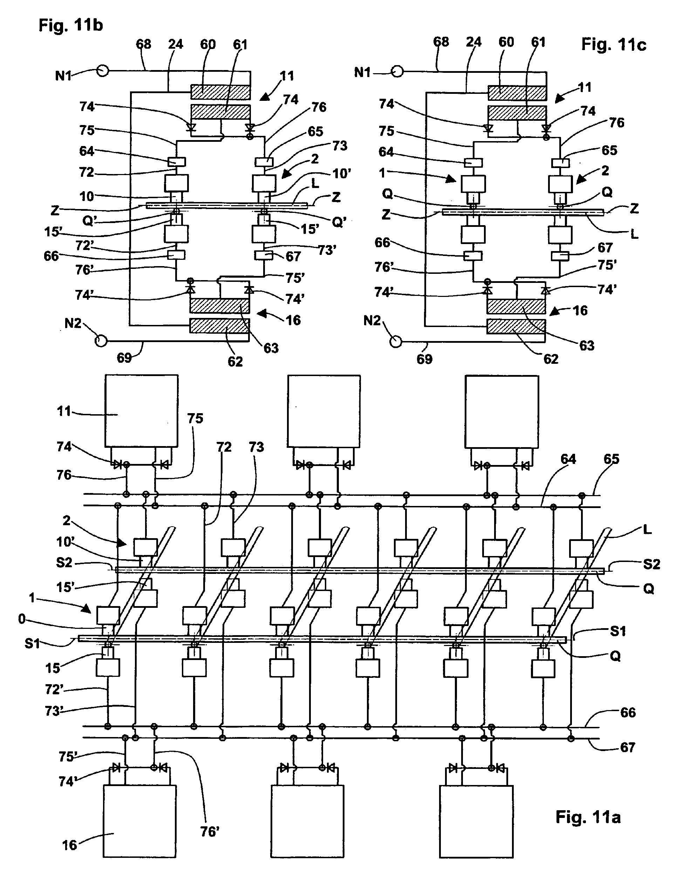

In den Fig. 11a, 11b, 11c ist schematisch ein weiteres Ausführungsbeispiel einer Schweißstromversorgung für die Schweißköpfe 1, 2 dargestellt, wobei die Fig. 11b und 11c sich nur dadurch unterscheiden, daß in Fig. 11b die Querdrähte oberhalb Q und in Fig. 11c unterhalb Q' der Längsdrähte L angeordnet sind. Im Gegensatz zu den bisher beschriebenen Ausführungsbeispielen werden die Drähte Q, Q'; L mit Hilfe von Gleichstrom miteinander verschweißt. Die Ausführung der Transformatoren 11, 16, deren Netzanbindung sowie deren serielle Verbindung entspricht dem Ausführungsbeispiel der Fig. 7a, 7b, 7c. Zur Erzeugung des Gleichstromes sind die Sekundärwicklungen 61, 63 der Transformatoren 11, 16 an ihren Ausgängen mit jeweils zwei Gleichrichten 74 bzw. 74' versehen. Bei diesem Ausführungsbeispiel erfolgt die Versorgung der Schweißköpfe 1, 2 mit Gleichstrom über ein Sammelschienensystem 64, 65; 66, 67, das dem in den Fig. 7a, 7b, 7c beschriebenen Ausführungsbeispiel entspricht. Hierbei können im Rahmen der Erfindung, die Sammelschienen, wie dargestellt, einstückig ausgebildet sein, oder aus mehreren Teilstücken 64', 64"; 65', 65"; 66', 66"; 67', 67", entsprechend dem in den Fig. 7a, 7b, 7c dargestellten Ausführungsbeispiel, bestehen. Der Mittelabgriff der Sekundärwicklung 61 der oberen Transformatoren 11 ist jeweils über eine Stromverbindung 75 mit der oberen Sammelschiene 64 verbunden, während die Ausgänge der Gleichrichter 74 jeweils über eine Stromverbindung 76 mit der oberen Sammelschiene 65 verbunden sind. Der Mittelabgriff der Sekundärwicklung 63 der unteren Transformatoren 16 ist jeweils über eine Stromverbindung 75' mit der unteren Sammelschiene 67 verbunden, während die Ausgänge der Gleichrichter 74 jeweils über eine Stromverbindung 76' mit der unteren Sammelschiene 66 verbunden sind. Die Versorgung der Schweißköpfe 1, 2 mit Gleichstrom hat den Vorteil, daß geringere induktive Verluste vorhanden sind, wodurch insbesondere größere Querdrahtteilungen möglich sind.

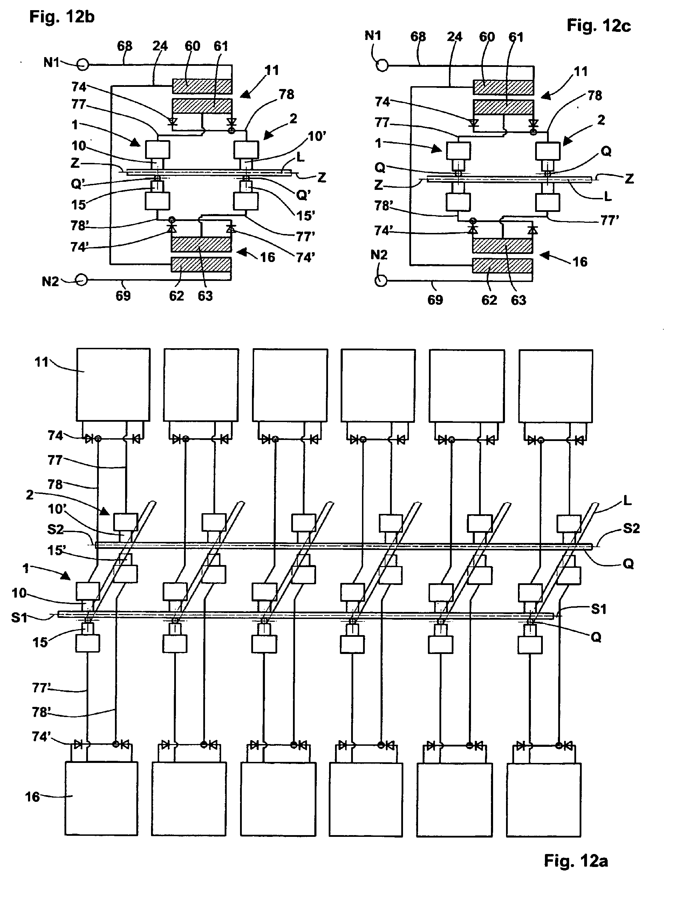

In den Fig. 12a, 12b, 12c ist schematisch ein weiteres Ausführungsbeispiel einer Gleichstromversorgung für die Schweißköpfe 1, 2 dargestellt, wobei die Fig. 12b und 12c sich nur dadurch unterscheiden, daß in Fig. 12b die Querdrähte oberhalb Q und in Fig. 12c unterhalb Q' der Längsdrähte L angeordnet sind. Die Ausführung der Transformatoren 11, 16, deren Netzanbindung sowie deren serielle Verbindung entspricht dem Ausführungsbeispiel der Fig. 11a, 11b, 11c. Zur Erzeugung des Gleichstromes sind die Sekundärwicklungen 61, 63 der Transformatoren 11, 16 an ihren Ausgängen mit jeweils zwei Gleichrichtern 74 bzw. 74' versehen. Bei diesem Ausführungsbeispiel werden die Schweißköpfe 1, 2 jeweils als in Längsdrahtrichtung wirkendes Doppelpunktpaar direkt von je einem Transformatorpaar 11; 16 mit Schweißstrom versorgt. Hierbei ist der Mittelabgriff des oberen Transformators 11 über die Stromverbindung 77 direkt mit der oberen Elektrode 10 des vorderen Schweißkopfes 1 elektrisch verbunden, während die Ausgänge der Gleichrichter 74 des oberen Transformators 11 über die Stromverbindung 78 direkt mit der oberen Elektrode 10' des hinteren Schweißkopfes 2 elektrisch verbunden sind. Der Mittelabgriff des unteren Transformators 16 ist über die Stromverbindung 77' direkt mit der oberen Elektrode 10' des hinteren Schweißkopfes 2 elektrisch verbunden, während die Ausgänge der Gleichrichter 74' des unteren Transformators 16 über die Stromverbindung 78' direkt mit der unteren Elektrode 15 des vorderen Schweißkopfes 1 elektrisch verbunden sind.

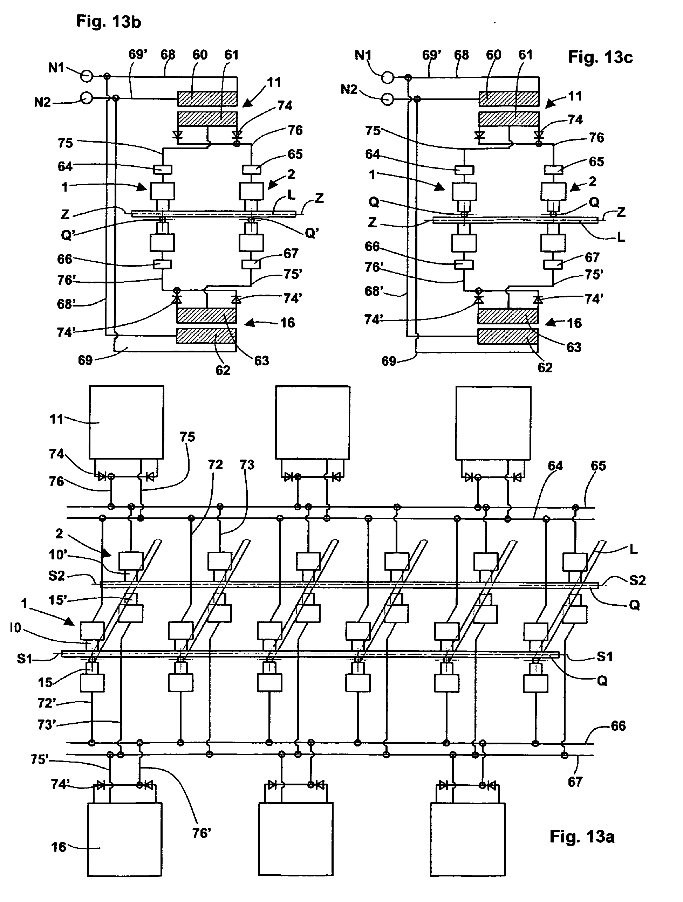

In den Fig. 13a, 13b, 13c ist schematisch ein weiteres Ausführungsbeispiel einer Gleichstromversorgung für die Schweißköpfe 1, 2 dargestellt, wobei die Fig. 13b und 13c sich nur dadurch unterscheiden, daß in Fig. 13b die Querdrähte oberhalb Q und in Fig. 13c unterhalb Q' der Längsdrähte L angeordnet sind. Die Ausführung der Transformatoren 11, 16, deren Netzanbindung sowie deren parallele Verbindung entspricht dem Ausführungsbeispiel der Fig. 9a, 9b, 9c. Beim dargestellten Ausführungsbeispiel erfolgt die Versorgung der Schweißköpfe 1, 2 mit Gleichstrom über ein Sammelschienensystem 64, 65; 66, 67, das dem in den Fig. 7a, 7b, 7c beschriebenen Ausführungsbeispiel entspricht. Hierbei können im Rahmen der Erfindung, die Sammelschienen, wie dargestellt, einstückig ausgebildet sein, oder aus mehreren Teilstücken 64', 64"; 65', 65"; 66', 66"; 67', 67", entsprechend dem in den Fig. 7a, 7b, 7c dargestellten Ausführungsbeispiel, bestehen. Beim dargestellten Ausführungsbeispiel werden die Schweißköpfe 1, 2 jeweils als in Längsdrahtrichtung wirkendes Doppelpunktpaar von den oberen und den unteren Sammelschienen 64, 65; 66, 67 entsprechend mit Schweißstrom versorgt, wie es bereits im Ausführungsbeispiel der Fig. 11a, 11b, 11c beschrieben wird.

In den Fig. 14a, 14b, 14c ist schematisch ein weiteres Ausführungsbeispiel einer Gleichstromversorgung für die Schweißköpfe 1, 2 dargestellt, wobei die Fig. 14b und 14c sich nur dadurch unterscheiden, daß in Fig. 14b die Querdrähte oberhalb Q und in Fig. 14c unterhalb Q' der Längsdrähte L angeordnet sind. Die Ausführung der Transformatoren 11, 16, deren Netzanbindung sowie deren parallele Verbindung entspricht dem Ausführungsbeispiel der Fig. 9a, 9b, 9c. Beim dargestellten Ausführungsbeispiel werden die Schweißköpfe 1, 2 jeweils als in Längsdrahtrichtung wirkendes Doppelpunktpaar direkt von je einem Transformatorpaar 11; 16 mit Schweißstrom versorgt, wie es bereits im Ausführungsbeispiel der Fig. 12a, 12b, 12c beschrieben wird.

Die gegenseitigen seitlichen Abstände der Querdrähte Q, Q' je Drahtgittermatte sind in folgender Weise wählbar:

Bedingt durch die Abmessungen der Einrichtungen der Schweißköpfe 1, 2 beträgt der Mindestabstand der beiden Schweißlinien S1-S1, S2-S2 im dargestellten Ausführungsbeispiel 150 mm, d.h. alle Querdrahtteilungen von 150 mm und größer, ganz allgemein gleich oder größer als der konstruktiv bedingte, kleinstmögliche Abstand der Schweißlinien S1-S1, S2-S2, können in der Weise erzeugt werden, daß die Schweißlinien S1-S1, S2-S2 im Abstand der gewünschten Querdrahtteilung positioniert werden und die Längsdrähte L mit Hilfe einer Vorschubeinrichtung 79 (Fig. 1) je Arbeitstakt der Schweißmaschine mit einer Schrittlänge vorgeschoben werden, die dem Doppelten dieser Querdrahtteilung entspricht. Bei jedem Arbeitstakt der Schweißanlage werden die Querdrähte in der entsprechenden Querdrahtteilung lückenlos mit den Längsdrähten L verschweißt.

Ist die geforderte Querdrahtteilung jedoch kleiner als 150 mm, beispielsweise 100 mm, so werden die Schweißlinien S1-S2, S2-S2 auf einen Abstand von 300 mm eingestellt und die Längsdrähte L je Arbeitstakt der Schweißmaschine mit einer Schrittlänge von 200 mm vorgeschoben. Hierbei entsteht bei jedem Arbeitstakt der Schweißanlage in der Querdrahtverteilung eine Lücke, die erst in der hinteren Schweißlinie S2-S2 durch einen Querdraht aufgefüllt wird. D.h. alle Querdrahtteilungen kleiner als 150 mm, ganz allgemein kleiner als der konstruktiv bedingte, kleinstmögliche Abstand der Schweißlinien S1-S1, S2-S2, können in der Weise erzeugt werden, daß die Schweißlinien S1-S1, S2-S2 im dreifachen Abstand der gewünschten Querdrahtteilung positioniert werden und die Längsdrähte L mit Hilfe der Vorschubeinrichtung 79 je Arbeitstakt der Schweißmaschine mit einer Schrittlänge vorgeschoben werden, die dem Doppelten dieser Querdrahtteilung entspricht. Im Rahmen der Erfindung ist es jedoch auch möglich, die Schweißlinien S1-S1, S2-S2 in einem Abstand anzuordnen, der der doppelten Querdrahtteilung entspricht. In diesem Fall muß die Vorschubeinrichtung 79 die Längsdrähte L je Arbeitstakt der Schweißmaschine alternierend mit einer Schrittlänge vorschieben, die der einfachen bzw. der dreifachen Querdrahtteilung entspricht.

Die beschriebenen Ausführungsbeispiele von Querdrahtteilungen zeigen, daß durch entsprechende Positionierung der Schweißlinien S1-S1, S2-S2 und durch entsprechende Wahl der Schrittlängen der Vorschubeinrichtung 79 für die Längsdrähte L alle gewünschten Querdrahtteilungen geschweißt werden können. Im Rahmen der Erfindung ist es jedoch auch möglich, den Vorschub der Längsdrähte durch Vorzugseinrichtungen durchzuführen, die an den bereits mit den Längsdrähten verschweißten Querdrähten angreifen.

Es versteht sich, daß das beschriebene Verfahren und die dargestellten Ausführungsbeispiele im Rahmen des allgemeinen Erfindungsgedankens verschiedentlich ausgestaltet werden können. Im Rahmen der Erfindung ist es möglich, die Schweißköpfe auch im Einzelpunktverfahren zu betreiben.

## Patentansprüche

1. Verfahren zum Herstellen von Drahtgittermatten mit parallelen Längsdrähten (L), die mit oberen und/oder unteren Querdräht en (Q/Q'), an den Kreuzungspunkten der Längsdrähte (L) und der Querdrähte (Q,Q') durch elektrisches Widerstandsschweißen verbunden sind, wobei zwei in seitlichem Abstand befindliche Querdrähte (Q,Q') gleichzeitig entlang zweier paralleler Schweißlinien jeweils mit den Längsdrähten (L) verschweißt werden, und wobei eine Schar von Längsdrähten (L) taktweise in Produktionsrichtung in einer horizontalen Längsdrahtzuführebene (Z) zugeführt wird, und die zwei im Abstand befindlichen Querdrähte (Q,Q') taktweise in die jeweilige Einschußlinie (E1,E2) und in einen jeder Schweißlinie (S1,S2) zugeordneten Einschußkanal (K1, K1',K2,K2') zugeführt und auf die für die Breite der Drahtgittermatten jeweils nötige Länge geschnitten werden, **dadurch gekennzeichnet, daß** jeder Querdraht (Q1-Q4) wahlweise in einem entlang jeder der beiden Schweißlinien (S1-S1, S2-S2) angeordneten oberen (K1, K1') und unteren Einschußkanal (K2, K2') geführt wird, so daß wahlweise Drahtgittermatten nur mit oberen (Q) oder nur mit unteren Querdrähten (Q') oder abwechselnd mit oberen (Q) und unteren Querdrähten (Q') oder Drahtgittermatten mit oben (Q) und unten paarweise übereinander angeordneten Querdrähten (Q') hergestellt werden, wobei im Fall der Drahtgittermatten mit paarweise übereinander angeordneten Querdrähten (Q, Q') bis zu vier Querdrähte (Q1-Q4) gleichzeitig mit den Längsdrähten (L) einer Drahtgittermatte verschweißt werden.

2. Verfahren nach Anspruch 1, **dadurch gekennzeichnet, daß** der Abstand der seitlich benachbarten oberen (Q) bzw. unteren Querdrähte (Q') durch Verschieben (P4, P4') zumindest einer Schweißlinie (S2-S2) relativ zur anderen Schweißlinie (S1-S1) und durch Wahl der Schrittlänge des Vorschubs der Längsdrähte (L) eingestellt wird.

3. Verfahren nach Anspruch 1 oder 2, **dadurch gekennzeichnet, daß** entlang der Länge einer herzustellenden Drahtgittermatte die Querdrähte jeweils nur oberhalb (Q) oder nur unterhalb (Q') mit der Schar von Längsdrähten (L) verschweißt werden, wobei Drahtgittermatten mit oberen Querdrähten (Q), vorzugsweise abwechselnd, auf Drahtgittermatten mit unteren Querdrähten (Q') folgen.

4. Verfahren nach Anspruch 1 oder 2, **dadurch gekennzeichnet, daß** innerhalb einer Drahtgittermatte die Querdrähte zu einem Teil nur oberhalb (Q) und zum anderen Teil nur unterhalb (Q') mit der Schar von Längsdrähten (L) verschweißt werden.

5. Verfahren nach Anspruch 1 oder 2, **dadurch gekennzeichnet, daß** die oberen Querdrähte (Q) und die unteren Querdrähte (Q') jeweils paarweise in Abstand übereinanderliegend mit der Schar von Längsdrähten verschweißt werden.

6. Anlage zum Herstellen von Drahtgittermatten mit parallelen Längsdrähten (L), die mit oberen und/oder unteren Querdrähten (Q,Q') an den Kreuzungspunkten der Längsdrähte (L) und der Querdrähte (Q,Q') durch elektrisches Widerstandsschweißen verbunden sind, nach dem Verfahren nach einem der Ansprüche 1 bis 5, mit einer Einrichtung zum taktweisen Vorschieben einer Schar der Längsdrähte (L) entlang einer horizontalen Längsdrahtzuführebene (Z) in der Produktionsrichtung, einer Einrichtung zum taktweisen Vorschieben der Querdrähte (Q,Q') zu zwei Einschußlinien die Einschußkanäle (K1,K1',K2,K2') aufweisen und zu einer Schweißvorrichtung mit zwei Schweißlinien (S1,S2) mit einer Mehrzahl von Schweißköpfen (1,2) pro Schweißlinie (S1,S2) führen, einer Schneideinrichtung (45,45') für die Querdrähte (Q,Q'), sowie mit je einer Zubringeinrichtung (25, 26, 25', 26') für jeden geschnittenen Querdraht (Q,Q') zur Schweißvorrichtung, **dadurch gekennzeichnet, daß** entlang jeder der beiden Einschußlinien (E1, E2) und Schweißlinien (S1, S2) der Schweißvorrichtung ein oberer (K1, K1') und ein unterer Einschußkanal (K2, K2') mit je einer zugeordneten Zubringeinrichtung (25, 26, 25', 26') vorgesehen ist, die wahlweise einsetzbar sind und dass die Schneideinrichtung (45, 45') samt Drahtführung (44, 44') senkrecht zur Längsdrahtzuführebene (Z, Z') schwenkbar (P7) ist, um die jeweiligen Einschußlinien (E1, E2) zum Beschicken der jeweiligen Einschußkanäle (K1, K2, K1', K2') mit Querdrähten (Q1-Q4) in Flucht mit den Einschußkanälen (K1, K2, K1', K2') zu bringen.

7. Anlage nach Anspruch 6, **dadurch gekennzeichnet, daß** zumindest eine Schweißlinie (S2-S2) relativ zur anderen (S1-S1) parallel verschiebbar ist und die Länge der Taktschritte der Schar von Längsdrähten (L) einstellbar ist, so daß der seitliche Abstand der Querdrähte (Q bzw. Q') wählbar ist.

8. Anlage nach Anspruch 6 oder 7, **dadurch gekennzeichnet, daß** jeder Einschußkanal (K1, K1', K2, K2') mit einer schwenkbaren Einschußklappe (29, 29', 33, 33') im Arbeitstakt der Schweißanlage öffenbar und schließbar ist, daß die Querdrähte (Q, Q') mittels Zubringarmen (30, 30', 34, 34') in einer geführten Zubringbahn (B) in die jeweilige Schweißlinie (S1-S1, S2-S2) förderbar sind, wobei die in Produktionsrichtung (P1) hinten angeordneten Zubringarme (30', 34') durch die Schweißlinie (S2-S2) greifen.

9. Anlage nach einem der Ansprüche 6 bis 8, **dadurch gekennzeichnet, daß** die Querdrähte (Q, Q') entlang einer Zubringbahn (B), die der gekoppelten Bewegung zweier Exzenter entspricht, der Schweißvorrichtung zuführbar sind.

10. Anlage nach einem der Ansprüche 6 bis 9, **dadurch gekennzeichnet, daß** die Zubringeinrichtungen (25, 26, 25', 26') zwecks Herausfahren aus dem Bewegungsbereich der Schweißköpfe (1, 2) auf bewegbaren, vorzugsweise schwenkbaren, Balken angeordnet sind.

11. Anlage nach einem der Ansprüche 6 bis 10, **dadurch gekennzeichnet, daß** die Querdrahtvorschiebeeinrichtung (35) jeder der beiden Einschußlinien (E1, E2) der Reihe nach in Vorschubrichtung (P5) gesehen einen Drahtspeicher (39, 39'), eine einlaufseitige Richteinrichtung (40, 40') samt Drahtführung (41, 41'), eine in beide Richtungen antreibbare, verstellbare Vorschubräder (37, 37') aufweisende Vorschubeinrichtung (36, 36'), eine Drahtklemmeinrichtung (46, 46') und eine auslaufseitige Richteinrichtung (43, 43') aufweist, wobei die Querdrähte (Q1-Q4) mittels der genannten Einrichtungen entlang der jeweiligen Einschußlinie (E1, E2) der Schneideinrichtung (45, 45') samt Drahtführung (44, 44') zuführbar sind.

12. Anlage nach Anspruch 11, **dadurch gekennzeichnet, daß** die Drahtspeicher (39, 39'), die einlaufseitigen Richtrichtungen (40, 40') samt Drahtführungen (41, 41'), die Drahtklemmeinrichtungen (46, 46') und die auslaufseitigen Richteinrichtungen (43, 43') zum gleichzeitigen Bearbeiten von zwei Querdrähten (Q1, Q2; Q3, Q4) als Doppelspureinrichtungen ausgebildet sind, wobei zum Einschwenken der Spuren in den Wirkungsbereich der Vorschubeinrichtungen (36, 36') die einlaufseitigen Richtrichtungen (40, 40') samt Drahtführungen (41, 41'), die Drahtklemmeinrichtungen (46, 46') sowie die auslaufseitigen Richteinrichtungen (43, 43') jeweils auf einem in den Richtungen des Doppelpfeiles (P6, P6') schwenkbaren Schwenkrahmen (47, 47') angeordnet sind.

13. Anlage nach einem der Ansprüche 6 bis 12, **dadurch gekennzeichnet, daß** zum Einstellen der Querdrahtteilung, die gleich oder größer als der konstruktiv bedingte, kleinstmögliche Abstand der Schweißlinien (S1-S1, S2-S2) ist, die Schweißlinien (S1-S1, S2-S2) in einem Abstand gleich der gewünschten Querdrahtteilung positionierbar sind, und die Längsdrähte (L) mit Hilfe einer Vorschubeinrichtung (79) mit einer Schrittlänge vorgeschoben werden, die dem Doppelten dieser Querdrahtteilung entspricht.

14. Anlage nach einem der Ansprüche 6 bis 12, **dadurch gekennzeichnet, daß** zum Einstellen der Querdrahtteilung, die kleiner als der konstruktiv bedingte, kleinstmögliche Abstand der Schweißlinien (S1-S1, S2-S2) ist, die Schweißlinien (S1-S1, S2-S2) in einem dreifachen Abstand der gewünschten Querdrahtteilung positionierbar sind, und die Längsdrähte (L) mit Hilfe einer Vorschubeinrichtung (79) mit einer Schrittlänge vorgeschoben werden, die dem Doppelten dieser Querdrahtteilung entspricht.

15. Anlage nach einem der Ansprüche 6 bis 14, **dadurch gekennzeichnet, daß** jeder Schweißkopf (1; 2) einen mit Druck beaufschlagbaren Arbeitszylinder (7, 7') aufweist, an dessen als Elektrodenstößel ausgebildete Kolbenstange (8, 8') eine Schweißelektrode (10, 10') befestigt ist, und daß der Schweißdruck mit vorbestimmtem Druckverlauf regelbar ist.

16. Anlage nach Anspruch 15, **dadurch gekennzeichnet, daß** zum Regeln des Schweißdruckes eine Regeleinrichtung (54), ein ansteuerbares Servoventil (52) zum wahlweisen Ansteuern des Druckanschlusses (A1) der Kolbenbodenseite des Arbeitszylinders (7, 7') und des Druckanschlusses (A2) der Kolbenstangenseite des Arbeitszylinders (7, 7'), ein 4/3-Wegeventil (53) sowie Meßeinrichtungen für den Schweißdruck (56), den Schweißstrom (58), den Hubweg (59) der Elektroden (10, 10') und gegebenenfalls der an den Elektroden (10, 10'; 15, 15') anstehenden Schweißkraft vorgesehen sind.

17. Anlage nach einem der Ansprüche 6 bis 16, **dadurch gekennzeichnet, daß** der Schweißdruck durch direkte Ansteuerung des Druckanschlusses (A1) der Kolbenbodenseite des Arbeitszylinders (7, 7') in vorbestimmter Kurvenform (d1, d2, d3) erzeugbar ist, und daß zum Heben (P3) des Elektrodenstößels (8, 8') der Druckanschluß (A1) der Kolbenbodenseite des Arbeitszylinders (7, 7') drucklos (d0) schaltbar ist, während gleichzeitig der Druckanschluß (A2) der Kolbenstangenseite des Arbeitszylinders (7, 7') rasch mit maximalem Druck (d1') beaufschlagt wird.

18. Anlage nach einem der Ansprüche 6 bis 16, **dadurch gekennzeichnet, daß** der Schweißdruck im Gegendruckverfahren erzeugbar ist, wobei zunächst der Druckanschluß (A1) der Kolbenbodenseite des Arbeitszylinders (7, 7') mit maximalem Arbeitsdruck (d4) beaufschlagbar ist, während in vorbestimmter Kurvenform der Druckanschluß (A2) der Kolbenstangenseite des Arbeitszylinders (7, 7') mit Druck (d2', d3', d4') beaufschlagbar ist, und daß zum Heben (P3) des Elektrodenstößels (8, 8') der Druckanschluß (A1) der Kolbenbodenseite des Arbeitszylinders (7, 7') drucklos (d0) schaltbar ist, während am Druckanschluß (A2) der Kolbenstangenseite des Arbeitszylinders (7, 7') weiterhin der Arbeitsdruck (d4') ansteht.

19. Anlage nach einem der Ansprüche 6 bis 18, **dadurch gekennzeichnet, daß** der Schweißstrom nach der Widerstandswechselstrom- oder nach der Widerstandsgleichstrommethode erzeugt wird.

20. Anlage nach einem der Ansprüche 6 bis 19, **dadurch gekennzeichnet, daß** jeweils ein oberer (11) und ein unterer (16) Transformator paarweise zusammengeschaltet sind, wobei die entsprechenden Primärwicklungen (61, 62) der Transformatoren (11, 16) entweder seriell oder parallel zusammengeschaltet sind.

21. Anlage nach einem der Ansprüche 6 bis 20, **dadurch gekennzeichnet, daß** mehrere Transformatorpaare (11, 16) ein aus zwei oberen (64, 65) und zwei unteren (66, 67) Sammelschienen bestehendes Sammelschienensystem speisen, wobei die oberen Transformatoren (11) die oberen Sammelschienen (64, 65) und die unteren Transformatoren (16) die unteren Sammelschienen (66, 67) versorgen, und daß die oberen und unteren Schweißköpfe (1, 2) jeweils paarweise von den Sammelschienen (64, 65; 66, 67) mit Schweißstrom versorgt werden.

22. Anlage nach Anspruch 21, **dadurch gekennzeichnet, daß** die Sammelschienen (64, 65, 66, 67) einstückig ausgebildet sind.

23. Anlage nach Anspruch 21, **dadurch gekennzeichnet, daß** die Sammelschienen (64, 65, 66, 67) aus mehreren Teilstücken (64', 64"; 65', 65"; 66', 66"; 67', 67") bestehen, wobei jedes obere und untere Teilstück mit zumindest einem Transformatorpaar (11, 16) elektrisch verbunden ist.

24. Anlage nach einem der Ansprüche 6 bis 20, **dadurch gekennzeichnet, daß** jedes Transformatorpaar (11, 16) jeweils ein Schweißkopfpaar (1, 2) direkt mit Schweißstrom versorgt.

25. Anlage nach einem der Ansprüche 6 bis 24, **dadurch gekennzeichnet, daß** die Schweißköpfe (1, 2) nach der Einzelpunktschweißmethode arbeiten.

26. Anlage nach einem der Ansprüche 6 bis 25, **dadurch gekennzeichnet, daß** mit Hilfe einer Auszugseinrichtung die geschweißte Drahtgitterbahn in Produktionsrichtung (P1) aus den Schweißlinien (S1-S1, S2-S2) ausziehbar ist, daß zum Abtrennen der Drahtgittermatten von der Drahtgitterbahn eine Schneideinrichtung vorgesehen ist, und daß zum Stapeln der abgetrennten Drahtgittermatten in vorbestimmter Reihenfolge eine Stapeleinrichtung vorgesehen ist.

27. Anlage nach einem der Ansprüche 6 bis 26, **dadurch gekennzeichnet, daß** eine gemeinsame Steuereinrichtung vorgesehen ist, die im Arbeitstakt der Schweißmaschine die Zufuhr der Längsdrähte, die Zuführung und Zubringung der Querdrähte, das taktweise Heben und Senken der Elektrodenstößel, die Ansteuerung der Versorgung mit Schweißdruck und Schweißstrom sowie den Abtransport der fertig geschweißten Drahtgittermatten aus den Schweißlinien, das Abtrennen der Drahtgittermatten von der Materialbahn und das Stapeln der abgetrennten Drahtgittermatten steuert.

28. Anlage nach Anspruch 27, **dadurch gekennzeichnet, daß** ein Steuerprogramm vorgesehen ist, das insbesondere die gewünschte Reihenfolge der von oben bzw. von unten zuzuführenden Querdrähte (Q, Q') in Abhängigkeit vom geforderten Typ der herzustellenden Drahtgittermatten vorgibt.

## Claims

1. Method for producing wire lattice mats comprising parallel longitudinal wires (L) which are connected to upper and/or lower transverse wires (Q, Q') at the points of intersection of the longitudinal wires (L) and the transverse wires (Q, Q') by electric resistance welding, two transverse wires (Q, Q') arranged with lateral spacing each being welded simultaneously to the longitudinal wires (L) along two parallel weld lines, and a series of longitudinal wires (L) being fed intermittently in the production direction in a horizontal longitudinal wire feed plane (Z), and the two transverse wires (Q, Q') arranged with spacing being fed into the respective weft line (E1, E2) and into a weft channel (K1, K1', K2, K2') associated with each weld line (S1, S2) and cut to the respective length required for the width of the wire lattice mats, **characterised in that** each transverse wire (Q1-Q4) is selectively guided in an upper (K1, K1') and lower weft channel (K2, K2') arranged along each of the two weld lines (S1-S1, S2-S2) in such a way that wire lattice mats are selectively produced exclusively with upper (Q) or exclusively with lower transverse wires (Q') or alternately with upper (Q) and lower transverse wires (Q'), or wire lattice mats are produced with upper (Q) and lower transverse wires (Q') arranged one above the other in pairs, up to four transverse wires (Q1-Q4) being welded simultaneously to the longitudinal wires (L) of a wire lattice mat in the case of wire lattice mats comprising transverse wires (Q, Q') arranged one above the other in pairs.

2. Method according to claim 1, **characterised in that** the distance between the laterally adjacent upper (Q) and lower transverse wires (Q') is adjusted by displacing (P4, P4') at least one weld line (S2-S2) relative to the other weld line (S1-S1) and by selecting the interval length of the feed of the longitudinal wires (L).

3. Method according to either claim 1 or claim 2, **characterised in that** along the length of a wire lattice mat to be produced, each of the transverse wires is welded to the series of longitudinal wires (L) either exclusively above (Q) or exclusively below (Q'), wire lattice mats comprising upper transverse wires (Q) following wire lattice mats comprising lower transverse wires (Q'), preferably alternately.

4. Method according to either claim 1 or claim 2, **characterised in that** within a wire lattice mat the transverse wires are welded to the series of longitudinal wires (L), in part exclusively above (Q) and in part exclusively below (Q').

5. Method according to either claim 1 or claim 2, **characterised in that** the upper transverse wires (Q) and at the lower transverse wires (Q') are each welded to the series of longitudinal wires in pairs and arranged one above the other with spacing.

6. System for producing wire lattice mats comprising parallel longitudinal wires (L) which are connected to upper and/or lower transverse wires (Q, Q') at points of intersection of the longitudinal wires (L) and the transverse wires (Q, Q') by electric resistance welding according to the method of any one of claims 1 to 5, said system comprising a means for intermittently feeding a series of longitudinal wires (L) along a horizontal longitudinal wire feed plane (2) in the production direction, a means for intermittently feeding the transverse wires (Q, Q') towards two weft lines (E1, E2) which comprise weft channels (K1, K1', K2, K2') and lead towards a welding device comprising two weld lines (S1, S2) comprising a plurality of welding heads (1, 2) per weld line (S1, S2), a cutting means (45, 45') for the transverse wires (Q, Q'), and comprising a loading means (25, 26, 25', 26') for loading each cut transverse wire (Q, Q') towards the welding device, **characterised in that**, along each of the two weft lines (E1, E2) and weld lines (S1, S2) of the welding device, an upper (K1, K1') and a lower weft channel (K2, K2') are each provided with an associated loading means (25, 26, 25', 26') which can be used selectively, and **in that** the cutting means (45, 45') including the wire guide (44, 44') can be pivoted (P7) at right angles to the longitudinal wire feed plane (Z, Z') in order to bring the respective weft lines (E1, E2) into alignment with the weft channels (K1, K2, K1', K2') to load the respective feed channels (K1, K2, K1', K2') with transverse wires (Q1-Q4).

7. System according to claim 6, **characterised in that** at least one weld line (S2-S2) is displaceable parallel to the other (S1-S1) and the length of the intermittence of the series of longitudinal wires (L) can be adjusted in such a way that the lateral distance between the transverse wires (Q and Q') can be selected.

8. System according to either claim 6 or claim 7, **characterised in that** each weft channel (K1, K1', K2, K2') can be opened and closed during the working cycle of the welding system using a pivotable weft valve (29, 29', 33, 33'), **in that** the transverse wires (Q, Q') can be conveyed in a guided loading path (B) by means of loading arms (30, 30', 34, 34') into the respective weld line (S1-S1, S2-S2), the loading arms (30', 34') arranged behind in the production direction (P1) reaching through the weld lines (S2-S2).

9. System according to any one of claims 6 to 8, **characterised in that** the transverse wires (Q, Q') can be fed along a loading path (B), which corresponds to the coupled movement of two cams, of the welding device.

10. System according to any one of claims 6 to 9, **characterised in that** the loading means (25, 26, 25', 26') are arranged on movable, preferably pivotable beams for the purpose of moving out of the movement region of the welding heads (1, 2).

11. System according to any one of claims 6 to 10, **characterised in that** the transverse wire feed means (35) of each of the two weft lines (E1, E2) as viewed in the feed direction (P5) comprises, in order, a wire store (39, 39'), an inlet-side alignment means (40, 40') including a wire guide (41, 41'), a feed means (36, 36') comprising adjustable feed wheels (37, 37') which can be driven in either direction, a wire clamping means (46, 46') and an outlet-side alignment means (43, 43'), it being possible to feed the transverse wires (Q1-Q4) by the aforementioned means along the respective weft line (E1, E2) of the cutting means (45, 45') including wire guide (44, 44').

12. System according to claim 11, **characterised in that** the wire store (39, 39'), the inlet-side alignment means (40, 40') including wire guides (41, 41'), the wire clamping means (46, 46') and the outlet-side alignment means (43, 43') are formed as dual track means for simultaneous processing of two transverse wires (Q1, Q2; Q3, Q4), the inlet-side alignment means (40, 40') including wire guides (41, 41'), the wire clamping means (46, 46') and the outlet-side alignment means (43, 43') each being arranged on a pivoting frame (47, 47') which is pivotable in the directions of the double-headed arrow (P6, P6') to pivot the tracks into the sphere of action of the feed means (36, 36').

13. System according to any one of claims 6 to 12, **characterised in that**, in order to adjust the transverse wire spacing, which is the same as or greater than the minimum constructionally permitted distance between the weld lines (S1-S1, S2-S2), the weld lines (S1-S1, S2-S2) can be positioned with spacing which is equal to the desired transverse wire spacing, and the longitudinal wires (L) are fed with the aid of a feed means (79) with an interval length which corresponds to double said transverse wire spacing.

14. System according to any one of claims 6 to 12, **characterised in that**, in order to adjust the transverse wire spacing, which is smaller than the minimum constructionally permitted distance between the weld lines (S1-S1, S2-S2), the weld lines (S1-S1, S2-S2) can be positioned with spacing which is three times the desired transverse wire spacing, and the longitudinal wires (L) are fed with the aid of a feed means (79) with an interval length which corresponds to double said transverse wire spacing.

15. System according to any one of claims 6 to 14, **characterised in that** each welding head (1; 2) comprises a working cylinder (7, 7') which can be pressurised, on the piston rod (8, 8') (formed as an electrode plunger) of which a welding electrode (10, 10') is fixed, and **in that** the welding pressure can be controlled with a predetermined march of pressure.

16. System according to claim 15, **characterised in that**, in order to control the welding pressure, a control means (54), a controllable servo valve (52) for selectively controlling the pressure connection (A1) of the piston base end of the working cylinder (7, 7') and the pressure connection (A2) of the piston rod end of the working cylinder (7, 7'), a 4/3-port directional valve (53) and measuring means for measuring the welding pressure (56), welding current (58), stroke path (59) of the electrodes (10, 10') and optionally the welding force prevailing at the electrodes (10, 10'; 15, 15') are provided.

17. System according to any one of claims 6 to 16, **characterised in that** the welding pressure can be generated in a predetermined curve shape (d1, d2, d3) by direct control of the pressure connection (A1) of the piston base end of the working cylinder (7, 7'), and **in that** the pressure connection (A1) of the piston base end of the working cylinder (7, 7') can be connected in a depressurised (d0) manner in order to lift (P3) the electrode plunger (8, 8'), whilst the pressure connection (A2) of the piston rod end of the working cylinder (7, 7') can simultaneously be pressurised quickly to the maximum pressure (d1').

18. System according to any one of claims 6 to 16, **characterised in that** the welding pressure can be generated by the back-pressure method, it being possible for the pressure connection (A1) of the piston base end of the working cylinder (7, 7') to first be subjected to maximum working pressure (d4), whilst with the predetermined curve shape it is possible for the pressure connection (A2) of the piston rod end of the working cylinder (7, 7') to be subjected to pressure (d2', d3', d4'), and **in that** the pressure connection (A1) of the piston base end of the working cylinder (7, 7') can be connected in a depressurised (d0) manner in order to lift (P3) the electrode plunger (8, 8'), whilst the working pressure (d4') continues to be exerted on the pressure connection (A2) of the piston rod end of the working cylinder (7, 7').

19. System according to any one of claims 6 to 18, **characterised in that** the welding current is generated by the resistance alternating current method or by the resistance direct current method.

20. System according to any one of claims 6 to 19, **characterised in that** an upper (11) and a lower (16) transformer are in each case interconnected in pairs, the corresponding primary windings (61, 62) of the transformers (11, 16) being interconnected either in series or in parallel.

21. System according to any one of claims 6 to 20, **characterised in that** a plurality of transformer pairs (11, 16) feed a busbar system consisting of two upper (64, 65) and two lower (66, 67) busbars, the upper transformers (11) supplying the upper busbars (64, 65) and the lower transformers (16) supplying the lower busbars (66, 67), and **in that** the upper and lower welding heads (1, 2) are each supplied, in pairs, with welding current by the busbars (64, 65; 66, 67).

22. System according to claim 21, **characterised in that** the busbars (64, 65, 66, 67) are formed in one piece.

23. System according to claim 21, **characterised in that** the busbars (64, 65, 66, 67) consist of a plurality of pieces (64', 64"; 65', 65"; 66', 66"; 67', 67"), each upper and lower piece being electrically connected to at least one transformer pair (11, 16).

24. System according to any one of claims 6 to 20, **characterised in that** each transformer pair (11, 16) supplies a respective welding head pair (1, 2) directly with welding current.

25. System according to any one of claims 6 to 24, **characterised in that** the welding heads (1, 2) operate by the single spot welding method.

26. System according to any one of claims 6 to 25, **characterised in that** with the aid of an extraction means the welded wire lattice web can be extracted from the weld lines (S1-S1, S2-S2) in the production direction (P1), **in that** a cutting means is provided to detach the wire lattice mats from the wire lattice web, and **in that** a stacking means is provided to stack the detached wire lattice mats in a predetermined sequence.

27. System according to any one of claims 6 to 26, **characterised in that** a common control means is provided which, during the working cycle of the welding machine, controls the feed of the longitudinal wires, the feed and loading of the transverse wires, the intermittent lifting and lowering of the electrode plunger, the control of the supply of welding pressure and welding current, and the removal of the finished welded wire lattice mats from the weld lines, the detachment of the wire lattice mats from the material web and the stacking of the detached wire lattice mats.

28. System according to claim 27, **characterised in that** a control program is provided which defines, in particular, the desired sequence of the transverse wires (Q, Q') to be fed from above and/or below as a function of the required type of wire lattice mats to be produced.

## Revendications

1. Procédé pour la fabrication de nappes de treillis métallique avec des fils longitudinaux parallèles (L), qui sont reliés par soudure à résistance électrique avec des fils transversaux supérieurs et/ou inférieurs (Q, Q') au niveau des points de croisement des fils longitudinaux (L) et des fils transversaux (Q, Q'), de telle manière que deux fils transversaux (Q, Q') qui se trouvent en écartement latéral sont soudés simultanément avec les fils longitudinaux (Q) respectivement le long de deux lignes de soudures parallèles, et qu'un groupe de fils longitudinaux (L) sont amenés de façon cadencée en direction de production dans un plan d'amenée horizontal (Z), et les deux fils transversaux (Q, Q') qui se trouvent en écartement latéral sont amenés de façon cadencée dans la ligne d'injection respective (E1, E2), et dans un canal d'injection (K1, K1', K2, K2') associé à chaque ligne de soudure (S1, S2) et sont coupés à la longueur respectivement nécessaire pour la largeur des nappes de treillis métallique,
**caractérisé en ce que** chaque fil transversal (Q1-Q4) est mené au choix dans un canal d'injection supérieur (K1, K1') et un canal d'injection inférieur (K2, K2') agencés le long de chacune des deux lignes de soudure (S1-S1, S2-S2), de sorte que l'on fabrique au choix des nappes de treillis métallique ayant uniquement des fils transversaux supérieurs (Q) ou uniquement des fils transversaux inférieurs (Q') ou alternativement des fils transversaux supérieurs (Q) et inférieurs (Q'), ou encore des nappes de treillis métallique avec des fils transversaux agencés au-dessus (Q) et au-dessous (Q') l'un au-dessus de l'autre par paires, et dans le cas des nappes de treillis métallique avec des fils transversaux (Q, Q') agencés l'un au-dessus de l'autre par paires, on soude simultanément jusqu'à quatre fils transversaux (Q1-Q4) avec les fils longitudinaux (L) d'une nappe de treillis métallique.

2. Procédé selon la revendication 1, **caractérisé en ce que** l'écartement entre des fils transversaux supérieurs (Q) ou respectivement inférieurs (Q') latéralement voisins est réglé par déplacement (P4, P4') d'au moins une ligne de soudure (S2-S2) par rapport à l'autre ligne de soudure (S1-S1) et par le choix de longueur de pas d'avance des fils longitudinaux (L).

3. Procédé selon la revendication 1 ou 2, **caractérisé en ce que** le long de la longueur d'une nappe de treillis métallique à fabriquer les fils transversaux sont soudés respectivement uniquement au-dessus (Q) ou uniquement au-dessous (Q') avec le groupe de fils longitudinaux (L), et **en ce que** des nappes de treillis métallique comprenant des fils transversaux supérieurs (Q) suivent, de préférence alternativement, des nappes de treillis métallique comprenant des fils transversaux inférieurs (Q').

4. Procédé selon la revendication 1 ou 2, **caractérisé en ce qu'**à l'intérieur d'une nappe de treillis métallique les fils transversaux sont soudés pour une partie uniquement au-dessus (Q) et pour l'autre partie uniquement au-dessous (Q') avec le groupe de fils longitudinaux (L).

5. Procédé selon la revendication 1 ou 2, **caractérisé en ce que** les fils transversaux supérieurs (Q) et les fils transversaux inférieurs (Q') sont soudés respectivement par paires avec le groupe de fils longitudinaux en étant situés à distance les uns au-dessus des autres.

6. Installation pour la fabrication de nappes de treillis métallique comprenant des fils longitudinaux parallèles (L), qui sont reliés par soudure à résistance électrique avec des fils transversaux supérieurs et/ou inférieurs (Q, Q') au niveau des points de croisement des fils longitudinaux (L) et des fils transversaux (Q, Q'), d'après le procédé selon l'une des revendications 1 à 5, comprenant un système pour l'avance cadencée d'un groupe de fils longitudinaux (L) le long d'un plan d'amenée horizontal (Z) des fils longitudinaux dans la direction de production, un système pour l'avance cadencée des fils transversaux (Q, Q') vers deux lignes d'injection (E1, E2) qui comprennent des canaux d'injection (K1, K1', K2, K2') et mènent à un dispositif de soudure avec deux lignes de soudure (S1, S2) dotées d'une pluralité de têtes de soudure (1, 2) pour chaque ligne de soudure (S1, S2), un système de coupe (45, 45') pour les fils transversaux (Q, Q'), ainsi qu'un dispositif d'amenée respectif (25, 26, 25', 26') pour chaque fil transversal coupé (Q, Q') vers le dispositif de coupe, **caractérisée en ce que** le long de chacune des deux lignes d'injection (E1, E2) et des lignes de soudure (S1, S2) du dispositif de soudage, il est prévu un canal d'injection supérieur (K1, K1') et un canal d'injection inférieur (K2, K2') avec un dispositif d'amenée associé respectif (25, 26, 25', 26'), lesquels peuvent être sélectivement mis en service, et **en ce que** le système de coupe (45, 45') avec le guidage de fil (44, 44') est susceptible d'être pivoté (P7) perpendiculairement au plan d'amenée (Z, Z') des fils longitudinaux, afin d'amener les lignes d'injection respectives (E1, E2) en alignement avec les canaux d'injection (K1, K2, K1', K2') pour le chargement des canaux d'injection respectifs (K1, K2, K1', K2') avec des fils transversaux (Q1-Q4).

7. Installation selon la revendication 6, **caractérisée en ce qu'**au moins une ligne de soudage (S2-S2) est susceptible d'être déplacée parallèlement par rapport à l'autre (S1-S1), et **en ce que** la longueur des pas de cadence du groupe de fils longitudinaux (S) est réglable de telle façon que l'écartement latéral des fils transversaux (Q ou Q') peut être choisi.

8. Installation selon la revendication 6 ou 7, **caractérisée en ce que** chaque canal d'injection (K1, K1', K2, K2') peut être ouvert et fermé avec un clapet d'injection pivotant (29, 29', 33, 33') selon la cadence de travail de l'installation de soudure, **en ce que** les fils transversaux (Q, Q') sont susceptibles d'être convoyés au moyen de bras d'amenée (30, 30', 34, 34') dans une trajectoire d'amenée guidée (B) dans la ligne de soudage respective (S1-S1, S2-S2), moyennant quoi les bras d'amenée (30', 34') agencés en arrière dans la direction de production (P1) s'engagent en traversant la ligne de soudage (S2-S2).

9. Installation selon l'une des revendications 6 à 8, **caractérisée en ce que** les fils transversaux (Q, Q') sont susceptibles d'être amenés vers le dispositif de soudage le long d'une trajectoire d'amenée (B) qui correspond au mouvement couplé de deux excentriques.

10. Installation selon l'une des revendications 6 à 9, **caractérisée en ce que**, dans le but de les sortir hors de la zone de déplacement des têtes de soudage (1, 2), les systèmes d'amenée (25, 26, 25', 26') sont agencés sur des poutres mobiles, de préférence pivotantes.

11. Installation selon l'une des revendications 6 à 10, **caractérisée en ce que** le système d'avance (35) des fils transversaux de chacune des deux lignes d'injection (E1, E2) comprend, en succession comme vus dans la direction d'avance (P5), un accumulateur de fil (39, 39'), un dispositif redresseur (40, 40') du côté entrée y compris un guidage de fil (41, 41'), un dispositif d'avance (36, 36') qui comprend des roues d'avance (37, 37') réglables susceptibles d'être entraînées dans les deux directions, un dispositif de serrage de fil (46, 46'), et un dispositif redresseur (43, 43') du côté sortie, dans laquelle les fils transversaux (Q1-Q4) peuvent être amenés au dispositif de coupe (45, 45') ensemble avec le guidage de fil (44, 44') au moyen des systèmes précités le long de la ligne d'injection respective (E1, E2).

12. Installation selon la revendication 11, **caractérisée en ce que** l'accumulateur de fil (39, 39'), les dispositifs redresseurs (40, 40') du côté entrée y compris les guidages de fil (41, 41'), les dispositifs de serrage de fil (46, 46'), et les dispositifs redresseurs (43, 43') du côté sortie sont réalisés pour travailler simultanément sur deux fils transversaux (Q1, Q2 ; Q3, Q4) sous forme de système à double voie, dans lesquels, pour faire pivoter les voies vers la zone d'action des dispositif d'amenée (36, 36'), les dispositifs redresseurs (40, 40') du côté entrée y compris les guidages de fil (41, 41'), les dispositifs de serrage de fil (46, 46'), ainsi que les dispositifs redresseurs (43, 43') du côté sortie sont agencés respectivement sur un cadre pivotant (47, 47') capable de pivoter dans les directions de la double flèche (P6, P6').

13. Installation selon l'une des revendications 6 à 12, **caractérisée en ce que**, pour régler la subdivision des fils transversaux, laquelle est égale ou supérieure au plus petit écartement, du à la construction, des lignes de soudage (S1-S1, S2-S2), les lignes de soudage (S1-S1, S2-S2) sont susceptibles d'être positionnées à une distance égale à la subdivision désirée des fils transversaux, et les fils longitudinaux (L) sont avancés à l'aide d'un dispositif d'avance (79), sur une longueur de pas qui correspond au double de cette subdivision des fils transversaux.

14. Installation selon l'une des revendications 6 à 12, **caractérisée en ce que**, pour régler la subdivision des fils transversaux, laquelle est inférieure au plus petit écartement, du à la construction, des lignes de soudage (S1-S1, S2-S2), les lignes de soudage (S1-S1, S2-S2) sont susceptibles d'être positionnées à une distance égale à trois fois la subdivision désirée des fils transversaux, et les fils longitudinaux (L) sont avancés à l'aide d'un dispositif d'avance (79), sur une longueur de pas qui correspond au double de cette subdivision des fils transversaux.

15. Installation selon l'une des revendications 6 à 14, **caractérisée en ce que** chaque tête de soudure (1 ; 2) comprend un cylindre de travail (7, 7') susceptible d'être alimenté en pression, avec une électrode de soudage (10, 10') fixée sur sa tige de piston (8, 8') réalisée sous forme de poinçon-électrode, et **en ce que** la pression de soudage est susceptible d'être régulée avec une évolution de pression prédéterminée.

16. Installation selon la revendication 15, **caractérisée en ce que**, pour réguler la pression de soudage, il est prévu un système de régulation (54), une servo-valve (52) pilotable destinée à piloter de façon sélective le raccord de pression (A1) du côté du cylindre de travail (7, 7') correspondant au fond du piston et le raccord de pression (A2) du côté du cylindre de travail (7, 7') correspondant à la tige de piston, une vanne à quatre voies/trois positions (53) ainsi que des dispositifs de mesure pour la pression de soudure (56), pour le courant de soudure (58), pour la course (59) des électrodes (10, 10'), et le cas échéant pour la force de soudure apparaissant au niveau des électrodes (10, 10'; 15, 15').

17. Installation selon l'une des revendications 6 à 16, **caractérisée en ce que** la pression de soudure est susceptible d'être engendrée par pilotage direct du raccord de pression (A1) du côté du cylindre de travail (7, 7') correspondant au fond du piston, avec une forme en courbe prédéterminée (d1, d2, d3), et **en ce que** pour le soulèvement (P3) du poinçon-électrode (8, 8') le raccord de pression (A1) du côté du cylindre de travail (7, 7') correspondant au fond de piston peut être commuté sans pression (d0), alors que simultanément le raccord de pression (A2) du côté du cylindre de travail (7, 7') correspondant à la tige de piston est susceptible d'être rapidement alimenté avec la pression maximale (d1').

18. Installation selon l'une des revendications 6 à 16, **caractérisée en ce que** la pression de soudure est susceptible d'être générée selon un processus à contre-pression, dans lequel le raccord de pression (A1) du côté du cylindre de travail (7, 7') correspondant au fond de piston est alimenté avec la pression de travail maximum (d4) tandis que le raccord de pression (A2) du côté du cylindre de travail (7, 7') correspondant à la tige de piston peut être alimenté en pression (d2', d3', d4') suivant une forme en courbe prédéterminée, et **en ce que** pour le soulèvement (P3) du poinçon-électrode (8, 8'), le raccord de pression (A1) du côté du cylindre de travail (7, 7') correspondant au fond du piston peut être commuté sans pression (d0), alors que la pression de travail (d4') continue à régner au raccord de pression (A2) du côté du cylindre de travail (7, 7') correspondant à la tige de piston.

19. Installation selon l'une des revendications 6 à 18, **caractérisée en ce que** le courant de soudure est engendré selon la méthode à courant alternatif ou selon la méthode à courant continu traversant une résistance.

20. Installation selon l'une des revendications 6 à 19, **caractérisée en ce qu'**un transformateur supérieur (11) et un transformateur inférieur (16) sont branchés par paire, et les enroulements primaires correspondants (61, 62) des transformateurs (11, 16) sont branchés soit en série soit en parallèle.

21. Installation selon l'une des revendications 6 à 20, **caractérisée en ce que** plusieurs paires de transformateurs (11, 16) alimentent un système de rails collecteurs constitués de deux rails collecteurs supérieurs (64, 65) et de deux rails collecteurs inférieurs (66, 67), tels que les transformateurs supérieurs (11) alimentent les rails collecteurs supérieurs (64, 65) et les transformateurs inférieurs (16) alimentent les rails collecteurs inférieurs (66, 67), et **en ce que** les têtes de soudage supérieures et inférieures (1, 2) sont alimentées en courant de soudure respectivement par paires depuis les rails collecteurs (64, 65 ; 66, 67).

22. Installation selon la revendication 21, **caractérisée en ce que** les rails collecteurs (64, 65, 66, 67) sont réalisés d'une seule pièce.

23. Installation selon la revendication 21, **caractérisée en ce que** les rails collecteurs (64, 65, 66, 67) sont constitués de plusieurs morceaux partiels (64', 64" ; 65', 65" ; 66', 66" ; 67', 67"), tels que chaque morceau partiel supérieur et chaque morceau partiel inférieur est connecté électriquement à au moins une paire de transformateurs (11, 16).

24. Installation selon l'une des revendications 6 à 20, **caractérisée en ce que** chaque paire de transformateurs (11, 16) alimente directement une paire de têtes de soudure respectives (1, 2) avec du courant de soudure.

25. Installation selon l'une des revendications 6 à 24, **caractérisée en ce que** les têtes de soudure (1, 2) fonctionnent suivant le procédé de soudure par points individuels.

26. Installation selon l'une des revendications 6 à 25, **caractérisée en ce que** la nappe de treillis métallique soudée est susceptible d'être déployée en direction de production (P1) à partir des lignes de soudure (S1-S1, S2-S2) à l'aide d'un dispositif de déploiement, **en ce qu'**il est prévu un système de coupe pour séparer des morceaux de treillis métallique depuis la nappe de treillis métallique, et **en ce que** pour empiler les morceaux de treillis métallique séparés suivant une succession prédéterminée, il est prévu un système d'empilement.

27. Installation selon l'une des revendications 6 à 26, **caractérisée en ce qu'**il est prévu un système de commande commun qui commande suivant la cadence de travail de la machine de soudage l'alimentation des fils longitudinaux, l'alimentation et l'amenée des fils transversaux, le soulèvement et l'abaissement cadencé des poinçons-électrodes, le pilotage de l'alimentation de la pression de soudage et du courant de soudage ainsi que l'évacuation des panneaux de treillis métallique finis soudés hors des lignes de soudage, la séparation des panneaux de treillis métallique depuis la nappe de matériau et l'empilement des nappes de treillis métallique séparés.

28. Installation selon la revendication 27, **caractérisée en ce qu'**il est prévu un programme de commande qui impose en particulier la succession désirée des fils transversaux (Q, Q') à amener depuis le haut ou depuis le bas en fonction du type requis pour les nappes de treillis métallique à fabriquer.
